# EUROPÄISCHE PATENTSCHRIFT

(11) **EP 0 655 470 B1**
(45) Veröffentlichungstag und Bekanntmachung des Hinweises auf die Patenterteilung: **12.05.1999**
(21) Anmeldenummer: 94810654.7
(22) Anmeldetag: 17.11.1994
(51) Int. Cl.: C08F 226/06, C08F 220/00, G02C 7/04, G02B 1/04, B29D 11/00

(54) **Vernetzbare Copolymere und Hydrogele**
Cross-linkable copolymers and hydrogels
Copolymères réticulables et hydrogels

(30) Priorität: 26.11.1993 EP 93810827
(43) Veröffentlichungstag der Anmeldung: 31.05.1995
(73) Patentinhaber: Novartis AG, 4058 Basel (CH); Novartis-Erfindungen Verwaltungsgesellschaft m.b.H., 1235 Wien (AT)
(72) Erfinder: Bothe, Harald, Dr., D-65207 Wiesbaden (DE); Müller, Achim, Dr., D-63741 Aschaffenburg (DE); Seiferling, Bernhard, Dr., D-63773 Goldbach (DE); Borghorst, Sharla, D-60598 Frankfurt am Main (DE); Golby, John, Dr., D-63739 Aschaffenburg (DE); Hagmann, Peter, Dr., D-63906 Erlenbach am Main (DE); Herbrechsmeier, Peter, Dr., D-61462 Königstein (DE); Kretzschmar, Otto, Dr., D-64683 Einhausen (DE)

(56) Entgegenhaltungen:
- EP-A- 0 234 749
- EP-A- 0 418 721

## Beschreibung

Die vorliegende Erfindung betrifft neue Copolymere auf der Grundlage von Vinyllactamen, deren Monomer-Bausteine eine statistische Verteilung aufweisen, die wasserlöslich und vernetzbar sind, und gegebenenfalls mit reaktiven Vinylmonomeren modifiziert werden, Verfahren zur Herstellung der neuen Copolymere, vernetzte wasserunlösliche Copolymere, Hydrogele und Formkörper aus den vernetzten wasserunlöslichen Copolymeren, insbesondere Kontaktlinsen, und Verfahren zur Herstellung von Hydrogelen und fertigen Kontaktlinsen unter Verwendung der genannten vernetzbaren wasserlöslichen Copolymeren.

Vinyllactam-Copolymere wie z.B. Vinylpyrrolidon-Copolymere sind als Material für hochwasserhaltige Kontaklinsen schon länger bekannt. Stellvertretend sind hier z.B. Scafilcon A oder Surfilcon A genannt. Sie haben sich in der Praxis wegen ihres hohen Tragekomforts sehr gut bewährt.

US 4 347 198 beschreibt die Herstellung von Kontaktlinsen, wobei eine hydrophile Komponente, z.B. N-Vinylpyrrolidon, eine hydrophobe Komponente, z.B. Methylmethacrylat, ein Vernetzungsmittel und ein Initiator in einem Lösungsmittel, z.B. DMSO vermischt werden, und anschliessend das Ganze in einer Form vernetzt wird. Nach dem Extrahieren und Aequilibrieren in Wasser erhält man eine weiche Hydrogel-Kontaktlinse. Eine Extraktion mit Wasser ist deshalb notwendig, weil das Lösungsmittel und nicht umgesetzte Vinylmonomere entfernt werden müssen. Da ein Polymer z.B. in DMSO einerseits und Wasser andererseits unterschiedlich stark quillt, nimmt die Kontaktlinse erst jetzt ihre endgültige Grösse ein.

EP 216 074 beschreibt ein Verfahren zur Herstellung von Hydrogelkontaktlinsen. Es wird dort ein mit Methacrylat modifizierter Polyvinylalkohol verwendet, der in DMSO-Lösung mit Vinylmonomeren in einer geeigneten Giessform copolymerisiert wird, z.B. in Gegenwart eines Photoinitiators durch Bestrahlung mit UV-Licht für etwa 3 Stunden. Nach dem Entformen wird die Kontaktlinse mit Wasser bzw. physiologischer Kochsalzlösung extrahiert, um das DMSO und nicht umgesetzte Vinylmonomere zu entfernen. Auch hier erhält die Kontaktlinse wegen des unterschiedlichen Einflusses von DMSO und Wasser auf ihre Quellung die endgültige Geometrie zuletzt.

Es werden Anstrengungen von verschiedenen Seiten gemacht, um die Reaktionszeiten bei der Polymerherstellung zu verkürzen, um die Linsenfertigung rationeller zu gestalten. EP 370 827 (Vistakon) beschreibt z.B. die Verwendung von Borsäureestern bestimmter difunktioneller Alkohole als Lösungsmittel für die Polymerisation von, im wesentlichen, HEMA in einer Polystyrol-Giessform. Die Polymerisation erfolgt wiederum in Gegenwart eines Photoinitiators durch Bestrahlung mit UV-Licht in nur 6 - 12 Minuten, und liefert ein Gel, das anschliessend mit Wasser extrahiert werden muss.

Der eine Nachteil der bisherigen Verfahren zur Herstellung von Kontaktlinsen ist die langwierige Extraktion mit Wasser bzw. physiologischer Kochsalzlösung, die eine rationelle Kontaktlinsenherstellung mit kurzen Zykluszeiten ausschliesst.

Ein weiterer Nachteil der bisherigen Verfahren ist, wie bereits erwähnt, die relativ langsame Vernetzungsgeschwindigkeit bei der Herstellung von Polymeren beim Stand der Technik.

Die vorliegende Erfindung schafft hier Abhilfe. Es werden nämlich statistische Copolymere offenbart, die wasserlöslich und vernetzbar sind. Die oben erwähnte langwierige Extraktion mit Wasser bzw. physiologischer Kochsalzlösung nach einer Vernetzung entfällt bei der vorliegenden Erfindung, da beispielsweise in Wasser vernetzt werden kann. Dem Nachteil der relativ langsamen Vernetzungsgeschwindigkeit wird dadurch begegnet, dass man nicht Monomere als Ausgangsmaterial zur Herstellung von Kontaktlinsen einsetzt, sondern Copolymere.

Ein gegenstand ist ein wasserlösliches vernetzbares Copolymer, enthaltend ein Copolymerisationsprodukt eines Monomerengemisches bestehend im wesentlichen aus 30 - 95 Molprozent eines Vinyllactams (a) und 5 - 70 Molprozent von mindestens einem Vinylmonomer (b), ausgewählt aus einer Gruppe von hydrophoben, hydrophilen und funktionellen Vinylmonomeren, dadurch gekennzeichnet, dass die Monomeren im Copolymer als statistisch verteilte Bausteine gemäss der Lewis-Mayo Theorie vorliegen, wobei im Copolymer ein funktionelles Vinylmonomer (b) als Baustein enthalten ist, und dieser mit einem reaktiven Vinylmonomer (c) modifiziert ist, wobei das reaktive Vinylmonomer (c) unter Erhalt seiner vinylischen Gruppe und unter Ausbildung einer kovalenten Bindung mit einem Baustein eines funktionellen Vinylmonomers verknüpft ist, und wobei der Anteil des reaktiven Vinylmonomers (c) bis zu 50 Molprozent in Bezug auf die Monomersumme aus Vinylmonomer (b) und (c) beträgt.

Wenn im Zusammenhang mit der vorliegenden Erfindung vor- oder nachstehend von einem Copolymer die Rede ist, so ist immer ein Copolymer gemeint, worin die Monomeren als statistisch verteilte Bausteine vorliegen.

Unter einem Copolymer, worin die Monomeren als statistisch verteilte Bausteine vorliegen, wird ein Copolymer verstanden, worin mindestens zwei verschiedenartige Monomere enthalten sind, bei denen in 98 % aller Fälle die Blockgrösse gleicher Monomer-Bausteine im Bereich von 1 bis 10, bevorzugt in 90 % aller Fälle im Bereich von 1 bis 7 und weiter bevorzugt in 80 % aller Fälle im Bereich von 1 bis 5 liegt. Bedeutungsgleich wird im Zusammenhang mit der vorliegenden Erfindung auch der Ausdruck einer "statistischen Monomerenverteilung in einem Copolymer" oder der Ausdruck "statistisches Copolymer" verwendet Eine statistische Monomerenverteilung in einem Copolymer bedeutet ebenfalls, dass besagtes Copolymer im wesentlichen frei von Homo- und Blockpolymeren ist. Statistische Copolymere unterscheiden sich durch ihre physikalischen Eigenschaften von ihren isomeren Homo- und Blockpolymeren, und können daher bei Bedarf von diesen mittels physikalischer Methoden getrennt werden. Typische Charakterisierungsmöglichkeiten für statistische Copolymere bestehen z.B. aufgrund der Molekulargewichte, der Löslichkeiten, ihrer thermischen Eigenschaften oder ihrer NMR-Spektren.

Statistische Copolymere lassen sich beispielsweise aufgrund der Molekulargewichtsverteilung von nicht-statistischen Copolymeren unterscheiden. Statistische Copolymere weisen im allgemeinen eine typische Gauss'sche Molekulargewichtsverteilung auf, während nicht-statistische Copolymere diese Gauss'sche Molekulargewichtsverteilung nicht aufweisen. Der Molekulargewichtsbereich bei einem statistischen Copolymer ist in der Regel einstellbar, und unter anderm abhängig von der Natur und der Menge eines verwendeten Lösungsmittels. Das mittlere Molekulargewicht lässt sich z.B. auf einen Bereich von 1.10⁵ bis 4.10⁵ einstellen, z.B. wenn die Copolymerisation in Methanol erfolgt.

Ein bevorzugtes Copolymer ist ein Copolymer gemäss Anspruch 1, enthaltend ein Copolymerisationsprodukt eines Monomerengemisches bestehend aus
50 - 90 Molprozent eines Vinyllactams (a) und
10 - 50 Molprozent von mindestens einem Vinylmonomer (b) und gegebenenfalls einem reaktiven Vinylmonomer (c).

Stärker bevorzugt wird ein Copolymer gemäss Anspruch 1, enthaltend ein Copolymerisationsprodukt eines Monomerengemisches bestehend aus
60 - 80 Molprozent eines Vinyllactams (a) und
20 - 40 Molprozent von mindestens einem Vinylmonomer (b) und gegebenenfalls einem reaktiven Vinylmonomer (c).

Bevorzugt wird ebenfalls ein Copolymer gemäss Anspruch 2, worin der Anteil an reaktivem Vinylmonomer (c) 5 bis 40 Molprozent in Bezug auf die Monomersumme aus Vinylmonomer (b) und (c) beträgt.

Weiter bevorzugt wird ein Copolymer gemäss Anspruch 3, worin der Anteil an reaktivem Vinylmonomer (c) 10 bis 25 Molprozent in Bezug auf die Monomersumme aus Vinylmonomer (b) und (c) beträgt.

Bei kommerziellen Linsen wird hauptsächlich Methylmethacrylat (MMA) als hydrophobes Vinylmonomer verwendet. MMA kann auch in der vorliegenden Erfindung eingesetzt werden. Es sind aber generell solche Vinylmonomere einsetzbar, die als Copolymer mit einem Vinyllactam ein optisch klares und mechanisch stabiles Hydrogel liefern.

Unter einem erfindungsgemässen Vinyllactam (a) wird beispielsweise ein fünf bis siebengliedriges Lactam der Formel I verstanden, 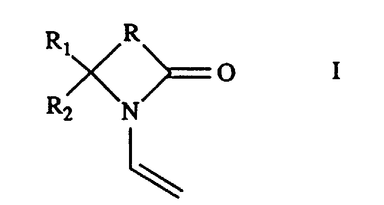 wobei R für eine Alkylenbrücke mit 2 bis 8 Kohlenstoffatomen steht, R₁ Wasserstoff, Alkyl, Aryl, Arakyl oder Alkaryl bedeutet, vorzugsweise Wasserstoff oder Niederalkyl mit bis zu 7 und weiter bevorzugt mit bis zu 4 Kohlenstoffatomen wie beispielsweise Methyl, Ethyl oder Propyl; Aryl mit bis zu 10 Kohlenstoffatomen, sowie Aralkyl oder Alkaryl mit bis zu 14 Kohlenstoffatomen; und R₂ für Wasserstoff oder Niederalkyl mit bis zu 7 und weiter bevorzugt mit bis zu 4 Kohlenstoffatomen wie beispielsweise Methyl, Ethyl oder Propyl steht.

Einige N-Vinyllactame (a) entsprechend der vorstehenden Stukturformel I sind N-Vinyl-2-pyrrolidon, N-Vinyl-2-piperidon, N-Vinyl-2-caprolactam, N-Vinyl-3-methyl-2-pyrrolidon, N-Vinyl-3-methyl-2-piperidon, N-Vinyl-3-methyl-2-caprolactam, N-Vinyl-4-methyl-2-pyrrolidon, N-Vinyl-4-methyl-2-caprolactam, N-Vinyl-5-methyl-2-pyrrolidon, N-Vinyl-5-methyl-2-piperidon, N-Vinyl-5,5-dimethyl-2-pyrrolidon, N-Vinyl-3,3,5-trimethyl-2-pyrrolidon, N-Vinyl-5-methyl-5-ethyl-2-pyrrolidon, N-Vinyl-3,4,5-trimethyl-3ethyl-2-pyrrolidon, N-Vinyl-6-methyl-2-piperidon, N-Vinyl-6-ethyl-2-piperidon, N-Vinyl-3,5-dimethyl-2-piperidon, N-Vinyl-4,4-dimethyl-2-piperidon, N-Vinyl-7-methyl-2-caprolactam, N-Vinyl-7-ethyl-2-caprolactam, N-Vinyl-3,5-dimethyl-2-caprolactam, N-Vinyl-4,6-dimethyl-2-caprolactam und N-Vinyl-3,5,7-trimethyl-2-caprolactam. Falls gewünscht können auch Mischungen davon verwendet werden.

Ein bevorzugt verwendetes Vinyllactam (a) ist ein heterocyclisches Monomer der Formel I, enthaltend 4 bis 6 Kohlenstoffatome im heterocyclischen Ring.

Ein weiteres, bevorzugt verwendetes Vinyllactam (a) ist ein heterocyclisches Monomer der Formel I, enthaltend 4 Kohlenstoffatome im heterocyclischen Ring.

Ein stärker bevorzugt verwendetes Vinyllactam (a) ist ein heterocyclisches Monomer der Formel I, enthaltend 4 Kohlenstoffatome im heterocyclischen Ring und worin R₁ für Wasserstoff oder Niederalkyl steht.

Ein ebenfalls stärker bevorzugt verwendetes Vinyllactam (a) ist ein heterocyclisches Monomer der Formel I, enthaltend 4 Kohlenstoffatome im heterocyclischen Ring und worin R₁ und R₂ unabhängig voneinander für Wasserstoff oder Niederalkyl stehen.

Ein stark bevorzugtes Vinyllactam (a) ist N-Vinyl-2-pyrrolidon.

Ein Vinylmonomer (b), das in einem erfindungsgemässen Copolymer enthalten ist, kann hydrophil, hydrophob, funktionell oder ein Gemisch der drei genannten sein. Geeignete vinylische Monomere umfassen insbesondere solche, die üblicherweise bei der Herstellung von Kontaktlinsen verwendet werden.

Unter hydrophoben vinylischen Monomeren (b) werden Monomere verstanden, die als Homopolymer typischerweise Polymere ergeben, die wasserunlöslich sind und weniger als 10 Gewichtsprozent Wasser absorbieren können.

Analog wird unter einem hydrophilen vinylischen Monomeren (b) ein Monomer verstanden, das als Homopolymer typischerweise ein Polymer ergibt, das wasserlöslich ist oder mindestens 10 Gewichtsprozent Wasser absorbieren kann.

Geeignete hydrophobe vinylische Monomere (b) umfassen C₁-C₁₈-Alkyl- und C₃-C₁₈-Cycloalkylacrylate und -methacrylate, C₃-C₁₈-Alkylacrylamide und -methacrylamide, Acrylnitril, Methacrylnitril, Vinyl-C₁-C₁₈-alkanoate, C₂-C₁₈-Alkene, C₂-C₁₈-Haloalkene, Styrol, Niederalkylstyrol, Niederalkylvinylether, C₂-C₁₀-Perfluoralkyl-acrylate und -methacrylate oder entsprechend partiell fluorierte Acrylate und Methacrylate, C₃-C₁₂-Perfluoralkyl-ethyl-thio carbonylaminoethyl-acrylate und -methacrylate, Acryloxy und Methacryloxy-alkylsiloxane, N-Vinylcarbazol, C₁-C₁₂-Alkylester der Maleinsäure, Fumarsäure, Itaconsäure, und Mesaconsäure. Bevorzugt sind z.B. C₁-C₄-Alkylester von vinylisch ungesättigten Carbonsäuren mit 3 bis 5 Kohlenstoffatomen oder Vinylester von Carbonsäuren mit bis zu 5 Kohlenstoffatomen.

Beispiele geeigneter hydrophober vinylischer Monomere umfassen Methylacrylat, Ethylacrylat, Propylacrylat, Isopropylacrylat, Cyclohexylacrylat, 2-Ethylhexylacrylat, Methylmethacrylat, Ethylmethacrylat, Propylmethacrylat, Vinylacetat, Vinylpropionat, Vinylbutyrat, Vinylvalerat, Styrol, Chloropren, Vinylchlorid, Vinylidenchlorid, Acrylnitril, 1-Buten, Butadien, Methacrylnitril, Vinyltoluol, Vinylethylether, Perfluorhexylethylthiocarbonylaminoethylmethacrylat, Isobornylmethacrylat, Trifluorethylmethacrylat, Hexafluorisopropylmethacrylat, Hexafluorbutylmethacrylat, Tris-trimethylsilyloxy-silylpropylmethacrylat, 3-Methacryloxypropylpentamethyldisiloxan und Bis(methacryloxypropyl)tetramethyldisiloxan.

Bevorzugte Beispiele hydrophober vinylischer Monomere (b) sind Methylmethacrylat und Ethylmethacrylat.

Geeignete hydrophile vinylische Monomere (b) umfassen durch Hydroxy substituierte Niederalkylacrylate und -methacrylate, Acrylamid, Methacrylamid, Niederalkylacrylamide und -methacrylamide, ethoxylierte Acrylate und Methacrylate, durch Hydroxy substituierte Niederalkylacrylamide und Methacrylamide, durch Hydroxy substituierte Niederalkylvinylether, Natriumethylensulfonat, Natriumstyrolsulfonat, 2-Acrylamido-2-methylpropansulfonsäure, N-Vinylpyrrol, 2- und 4-Vinylpyridin, vinylisch ungesättigte Carbonsäuren mit insgesamt 3 bis 5 Kohlenstoffatomen, Aminoniederalkyl- (wobei der Begriff "Amino" auch quaternäres Ammonium umfasst), Mononiederalkylamino-niederalkyl- und Diniederalkylamino-niederalkylacrylate und -methacrylate und Allylalkohol. Bevorzugt sind z.B. durch Hydroxy substituierte Niederalkylacrylate und -methacrylate, durch Hydroxy substituierte Niederalkylacrylamide und -methacrylamide und vinylisch ungesättigte Carbonsäuren mit insgesamt 3 bis 5 Kohlenstoffatomen.

Beispiele geeigneter hydrophiler vinylischer Monomere (b) umfassen Hydroxyethylmethacrylat, Hydroxyethylacrylat, Hydroxypropylacrylat, Ammoniumethylmethacrylathydrochlorid, Acrylamid, Methacrylamid, Dimethylacrylamid, Allylalkohol, Vinylpyridin, Glycerinmethacrylat, N-(1,1-Dimethyl-3-oxobutyl)acrylamid, Acrylsäure und Methacrylsäure.

Bevorzugte hydrophile vinylische Monomere (b) sind 2-Hydroxyethylmethacrylat, Acrylsäure, Methacrylsäure und Ammoniumethylmethacrylat-hydrochlorid.

Ein funktionelles Vinylmonomer (b) ist ein Monomer, das zusätzlich zur Vinylgruppe eine funktionelle Gruppe wie z.B. Hydroxy, Amino, durch Niederalkyl substituiertes Amino, Carboxyl, verestertes Carboxyl, bevorzugt Niederalkoxycarbonyl, Epoxy oder Sulfo (-SO₃H) trägt. Die funktionelle Gruppe bleibt nach einer Copolymerisation erhalten, und kann für eine Nachbehandlung oder bevorzugt für eine Modifikation des Copolymers verwendet werden.

Geeignete verwendbare funktionelle Vinylmonomere (b) sind z.B. durch Hydroxy substituierte Niederalkylacrylate und -methacrylate, ethoxylierte Acrylate und Methacrylate, Epoxyniederalkyl-acrylate und -methacrylate, Epoxycycloalkyl-niederalkylacrylate und -methacrylate, durch Hydroxy substituierte Niederalkylacrylamide und -methacrylamide, durch Hydroxy substituierte Niederalkylvinylether, durch Amino oder Hydroxy substituierte Styrole, Natriumethylensulfonat, Natriumstyrolsulfonat, 2-Acrylamido-2-methylpropansulfonsäure, Acrylsäure, Methacrylsäure, Aminoniederalkyl- (wobei der Begriff "Amino" auch quaternäres Ammonium umfasst) und Mononiederalkylamino-niederalkylacrylate und -methacrylate, Acryloxy- und Methacryloxy-niederalkyl-maleimide und Allylalkohol.

Beispiele von funktionellen Vinylmonomeren sind 2-Hydroxyethylmethacrylat, 3-Hydroxypropylmethacrylat, Acrylsäure, Methacrylsäure, 4-Aminostyrol, 3-Methacryloxymethyl-7-oxa-bicyclo[4.1.0]heptan (CHOMA), N-Methacryloxyethylmaleimid (DMI-O-MA), Glycidylmethacrylat (GMA), Ammoniumethylmethacrylat-hydrochlorid (AEMA) oder Ammoniumpropylmethacrylat-hydrochlorid (APMA).

Bevorzugte funktionelle Vinylmonomere (b) sind 2-Hydroxyethylmethacrylat und Ammoniumethylmethacrylat-hydrochlorid (AEMA).

Unter einem reaktiven Vinylmonomer (c) wird ein Monomer verstanden, das zusätzlich zur Vinylgruppe eine reaktive Gruppe trägt Ein reaktives Vinylmonomer (c) wird für eine der Polymerisation nachgeschaltete Modifikation eines Copolymers verwendet. Hierbei reagiert die reaktive Gruppe eines Monomers (c) mit einer im Copolymer vorhandenen funktionellen Gruppe unter Ausbildung einer kovalenten Bindung. Die vinylische Gruppe des Monomers (c) bleibt dabei erhalten. Eine Bedingung, um ein erfindungsgemässes Copolymer zu modifizieren, besteht darin, dass im genannten Copolymer ein funktionelles Monomer (b) als Baustein vorhanden ist.

Geeignet als reaktives Vinylmonomer (c) sind z.B. durch Hydroxy substituierte Niederalkylacrylate und -methacrylate, durch Hydroxy substituierte Niederalkylacrylamide und Methacrylamide, durch Hydroxy substituierte Niederalkylvinylether, 2-Acrylamido-2-methylpropansulfonsäure, Aminoniederalkyl- (wobei der Begriff "Amino" auch quaternäres Ammonium umfasst) und Mononiederalkylamino-niederalkylacrylate und -methacrylate, Allylalkohol, Epoxyniederalkylacrylate und -methacrylate, Isocyanato-niederalkylacrylate und -methacrylate, vinylisch ungesättigte Carbonsäuren mit 3 bis 7 C-Atomen sowie deren Säurechloride und Anhydride, durch Amino, Hydroxy oder Isocyanat substituierte Styrole und Epoxycycloalkylniederalkylacrylate und -methacrylate.

Beispiele für geeignete reaktive Vinylmonomere (c) umfassen unter anderem Hydroxyethylacrylat und -methacrylat, Hydroxypropylacrylat und -methacrylat, Allylalkohol, Glycerinmethacrylat, Acrylsäure, Acrylsäurechlorid, Methacrylsäure, Methacrylsäurechlorid, 4-Aminostyrol, 3-Methacryloxymethyl-7-oxa-bicyclo[4.1.0]heptan (CHOMA), Isocyanatoethylacrylat und -methacrylat, Glycidylmethacrylat (GMA), Ammoniumethylmethacrylat-hydrochlorid (AEMA) und Ammoniumpropylmethacrylat-hydrochlorid (APMA).

Bevorzugte reaktive Vinylmonomere (c) sind Hydroxyethylacrylat und -methacrylat, Hydroxypropylacrylat und -methacrylat, Isocyanatoethylacrylat und -methacrylat, Acryl- und Methacrylsäurechlorid, Ammoniumethylmethacrylat-hydrochlorid (AEMA) und Ammoniumpropylmethacrylat-hydrochlorid (APMA).

Der Begriff "nieder" bedeutet im Rahmen dieser Erfindung im Zusammenhang mit Resten und Verbindungen, soweit er nicht abweichend definiert ist, insbesondere Reste oder Verbindungen mit bis zu 7 Kohlenstoffatomen, vorzugsweise mit bis zu 4 Kohlenstoffatomen.

Niederalkyl weist insbesondere bis zu 7 Kohlenstoffatome auf, vorzugsweise bis zu 4 Kohlenstoffatome, und ist z.B. Methyl, Ethyl, Propyl, Butyl oder tert.-Butyl.

Aryl ist z.B. Naphthyl, Pyridyl, Thienyl oder bevorzugt unsubstituiertes oder durch Niederalkyl oder Niederalkoxy substituiertes Phenyl.

Niederalkoxy weist insbesondere bis zu 7 Kohlenstoffatome auf, vorzugsweise bis zu 4 Kohlenstoffatome, und ist z.B. Methoxy, Ethoxy, Propoxy oder tert-Butoxy.

Aralkyl ist vorzugsweise Phenylniederalkyl mit bis zu 4 Kohlenstoffatomen in der Alkyleinheit, z.B. 1- oder 2-Phenylethyl oder Benzyl.

Alkaryl ist bevorzugt Niederalkylphenyl mit bis zu 4 Kohlenstoffatomen in der Alkyleinheit, z.B. Ethylphenyl oder Toluyl.

Cycloalkyl weist insbesondere bis zu 7 Kohlenstoffatome auf, vorzugsweise 3 bis 6 Kohlenstoffatome, und ist z.B. Cyclopropyl, Cyclobutyl, Cyclopentyl oder Cyclohexyl.

Ein weiterer Gegenstand der vorliegenden Erfindung sind statistische Copolymere, worin die Monomer-Bausteine ausgewählt sind unter Vinyllactam (a), das ein heterocyclisches Monomer der Formel I ist, das 4 Kohlenstoffatome im heterocyclischen Ring enthält, sowie unter Vinylmonomer (b), das unsubstituiertes oder durch Hydroxy substituiertes C₁-C₁₈-Alkylacrylat oder -methacrylat, Niederalkylacrylamid oder -methacrylamid oder Allylalkohol ist.

In einem erfindungsgemässen Copolymer weiter bevorzugt verwendete Monomer-Bausteine sind z.B. ein Vinyllactam (a), das ein heterocyclisches Monomer der Formel I ist, das 4 Kohlenstoffatome im heterocyclischen Ring enthält, und ein Vinylmonomer (c), das ausgewählt ist unter Aminoniederalkyl- und Mononiederalkylamino-niederalkylacrylate und -methacrylate, Epoxyniederalkylacrylat und -methacrylat und vinylisch ungesättigter Carbonsäure mit 3 bis 7 C-Atomen sowie deren Säurechloride und Anhydride.

Weitere in einem erfindungsgemässen Copolymer bevorzugt verwendete Monomer-Bausteine sind z.B. ein Vinyllactam (a), das ein heterocyclisches Monomer der Formel I ist, das 4 Kohlenstoffatome im heterocyclischen Ring enthält, ein Vinylmonomer (b), das ausgewählt ist unter unsubstituiertem und durch Hydroxy substituiertem C₁-C₁₈-Alkylacrylat und -methacrylat, Aminoniederalkyl- und Mononiederalkylamino-niederalkylacrylat und -methacrylat, und ein Vinylmonomer (c), das ausgewählt ist unter Epoxyniederalkylacrylat und -methacrylat, Isocyanatoniederalkylacrylat und -methacrylat und vinylisch ungesättigter Carbonsäure mit 3 bis 7 C-Atomen sowie Säurechlorid und Anhydrid davon.

Weitere in einem erfindungsgemässen Copolymer bevorzugt verwendete Monomer-Bausteine sind z.B. Vinylpyrrolidon, ein Vinylmonomer (b), das ausgewählt ist unter durch Hydroxy substituiertem C₁-C₁₈-Alkylacrylat und -methacrylat, und ein Vinylmonomer (c), das ausgewählt ist unter Aminoniederalkyl und Mononiederalkyl-aminoniederalkylacrylat und -methacrylat, Epoxyniederalkylacrylat und -methacrylat und vinylisch ungesättigter Carbonsäure mit 3 bis 7 C-Atomen sowie Säurechlorid und Anhydrid davon.

Weitere in einem erfindungsgemässen Copolymer bevorzugt verwendete Monomer-Bausteine sind z.B. Vinylpyrrolidon, ein Monomer (b) ausgewählt unter Hydroxyethylmethacrylat und Hydroxypropylmethacrylat, und ein Vinylmonomer (c), das ausgewählt ist unter Aminoniederalkyl- und Mononiederalkyl-aminoniederalkylacrylat und -methacrylat und Epoxyniederalkylacrylat und -methacrylat.

Weitere in einem erfindungsgemässen Copolymer bevorzugt verwendete Monomer-Bausteine sind z.B. Vinylpyrrolidon, ein Monomer (b) ausgewählt unter Methylmethacrylat, Hydroxyethylmethacrylat und Hydroxypropylmethacrylat, und ein Vinylmonomer (c), das ausgewählt ist unter Glycidylmethacrylat (GMA), Isocyanatoethylmethacrylat, Ammoniumethylmethacrylat-hydrochlorid (AEMA) und Ammoniumpropylmethacrylathydrochlorid (APMA).

Weitere in einem erfindungsgemässen Copolymer bevorzugt verwendete Monomer-Bausteine sind z.B. Vinylpyrrolidon, ein Monomer (b) ausgewählt unter Methylmethacrylat, N,N-Dimethylmethacrylamid, Ammoniumethylmethacrylat-hydrochlorid (AEMA), Ammoniumpropylmethacrylat-hydrochlorid (APMA), Hydroxyethylmethacrylat und Hydroxypropylmethacrylat, und ein Vinylmonomer (c), das ausgewählt ist unter Glycidylmethacrylat (GMA), Isocyanatoethylmethacrylat (IEM) und Methacrylsäure.

Ein weiterer Gegenstand der vorliegenden Erfindung ist ein Verfahren zur Herstellung eines statistischen Copolymers.

Um ein Copolymer mit statistischer Verteilung der Monomer-Bausteine zu synthetisieren, ist es notwendig, die Copolymerisationsparameter der verwendeten Monomeren zu berücksichtigen. Es handelt sich in der vorliegenden Erfindung um ein Verfahren zur Synthese von statistischen Copolymeren unter Berücksichtigung der Lewis-Mayo Theorie.

Aus den Copolymerisationsparametern und der Monomerzusammensetzung kann die Copolymerzusammensetzung nach der Lewis-Mayo Gleichung berechnet werden, bzw. aus der gewünschten Copolymerzusammensetzung und den Copolymersationsparametern die benötigte Monomerzusammensetzung.

Die Lewis-Mayo Gleichung lautet wie folgt:
F₁/F₂ = ((r₁·M₁) + M₂)/((r₂·M₂) + M₁), wobei die folgenden Bedeutungen gelten:
F₁/F₂ = Verhältnis der Monomerbausteine im Copolymeren,
M₁; M₂ = momentane Monomerkonzentrationen im Reaktionsgefäss,
r₁ = k₁₁/k₁₂ ; r₂ = k₂₂/k₂₁ Copolymerisationsparameter, die aus Tabellenwerken entnommen werden können,
kᵢⱼ mit i = 1,2 und j = 1,2 Geschwindigkeitskonstanten der Reaktionen Radikal i mit Monomer j.

Ein Verfahren zur Herstellung eines statistischen Copolymeren wird durch die folgende Beschreibung charakterisiert. In einem Reaktionsgefäss legt man eine Monomermischung I vor, deren Zusammensetzung entsprechend der Lewis-Mayo Gleichung die gewünschte Copolymerzusammensetzung ergibt und initiiert die Polymerisation, beispielsweise mit einem thermischen Initiator (z.B. AIBN). Nach der Initiierung der Polymerisation dosiert man eine Monomermischung II zu, deren Zusammensetzung der gewünschten Copolymerzusammensetzung entspricht. Die Zudosiergeschwindigkeit richtet sich dabei nach dem Verbrauch der Monomeren. Die folgenden Bedingungen müssen im Reaktionsgefäss eingehalten werden:
dM₁/dt = dM₂/dt = 0 und dM₁/dM₂ = const.; das bedeutet, dass die Monomerenkonzentration während der Reaktion gleich bleiben muss und ihr Verhältnis konstant sein soll. Um diese Bedingungen zu erfüllen, stehen zwei Wege zur Verfügung:
1. Da die Initiatorkonzentration nach einer Kinetik erster Ordnung abnimmt und damit auch die Polymerisationsgeschwindigkeit zeitlich nicht konstant ist, muss dies bei der Zudosiergeschwindigkeit berücksichtigt werden. Näherungsweise kann die Zudosiergeschwindigkeit der Monomermischung II linear verringert werden.
2. Durch Zudosierung eines Initiators während der Reaktion kann die Initiatorkonzentration und somit auch die Polymerisationsgeschwindigkeit konstant gehalten werden. Somit kann auch die Zudosierung der Monomermischung II zeitlich konstant erfolgen.

Da man bei dieser Copolymersynthese ständig Monomere in das Reaktionsgefäss einbringt, jedoch kein Produkt austrägt (Semi Batch Betrieb), muss die Reaktion gestoppt werden.

Im Falle 1 geschieht dies automatisch, da die Initiatorkonzentration auf null abfällt. Im Falle 2 muss die Zudosierung der Monomeren, bzw. des Initiators gestoppt werden. Nach beendeter Zudosierung reagieren die noch verbliebenen Monomeren zu nicht statistischen Copolymeren ab. Diese Restmonomermenge wird durch die Ansatzgrösse zum Zeitpunkt t = 0 bestimmt, weshalb diese möglichst gering sein sollte.

Bei einer Terpolymerisation kann dieses Verfahren näherungsweise angewendet werden. Besonders günstige Vorraussetzung hierfür liegen dann vor, wenn das dritte Monomer (b), z.B. HEMA, GMA, CHOMA etc., dem zweiten Monomeren z.B. MMA (b), chemisch verwandt ist und sich bei der Copolymerisation bezüglich dem verwendeten Vinyllactam (a), z.B. N-Vinylpyrrolidon, ähnlich verhält, d.h. einen ähnlichen Copolymerisationsparameter aufweist.

Die Zusammensetzung der Monomerkomponenten in einer Monomermischung II entspricht, wie erwähnt, der gewünschten Endzusammensetzung eines Copolymers. Hieraus lässt sich mit der Lewis-Mayo Beziehung die Zusammensetzung der Monomermischung I berechnen.

Die Herstellung eines erfindungsgemässen Copolymeren kann in An- oder Abwesenheit eines Lösungsmittels durchgeführt werden. Als Lösungsmittel sind grundsätzlich all diejenigen Lösungsmittel geeignet, die sowohl ein unvernetztes Copolymer als auch eines der verwendeten Vinylmonomere (a),(b) und (c) lösen und ihnen gegenüber weitgehend inert sind. Beispiele hierfür sind Wasser, Alkohole wie Niederalkanole, z.B. Ethanol oder Methanol, ferner Carbonsäureamide, wie Dimethylformamid, oder Dimethylsulfoxid, Ether wie z.B. Diethylether, THF oder Diglyme, ebenso Gemische von geeigneten Lösungsmitteln, wie z.B. Gemische von einem Alkohol mit einem Ether, wie z.B. Ethanol / THF, oder Methanol/Diethylether. Bevorzugt verwendet werden Niederalkanole, z.B. Ethanol oder Methanol.

Die Zusammensetzung eines erfindungsgemässen Copolymers entscheidet, nachdem es vernetzt ist, über die Eigenschaft eines resultierenden Formkörpers, wie beispielsweise einer Hydrogelkontaktlinse. Das Verhältnis hydrophiler zu hydrophober Bausteine (a), (b) und (c) in einem Copolymer kann dabei vornehmlich dazu dienen, die mechanischen Eigenschaften einer Kontaktlinse zu steuern. Der Wassergehalt beispielsweise einer Hydrogelkontaktlinse wird z.B. durch den Gehalt an Vinyllactam, z.B. N-Vinyl-2-pyrrolidon, im Copolymer bestimmt. Hydrophile Vinylmonomere wie z.B. HEMA oder Methacrylsäure sind ebenfalls nützlich, um den Wassergehalt in einem Hydrogel zu steuern.

Eine Möglichkeit zur Steuerung der Molmasse eines Copolymers ist die Verwendung eines Reglers bei der Synthese. Ein bevorzugter Regler ist ein Niederalkanol wie z.B. Methanol oder Ethanol, das z.B. gleichzeitig als Lösungsmittel bei der Synthese eingesetzt werden kann.

Ein erfindungsgemässes Copolymer kann nach der Herstellung mit den üblichen Methoden gereinigt werden, z.B. durch Umfällen, Filtration, Entfernen von Restmonomeren im Vakuum, eventuell bei erhöhter Temperatur. Ein eventuell verwendetes Lösungsmittel kann am Rotationsverdampfer oder durch Giessen und Trocknen eines Films an Luft oder im Vakuum entfernt werden. Eine besonders elegante Methode ist die Reinigung durch Ultrafiltration zur Entfernung niedermolekularer Anteile und damit auch einfaches Einstellen der gewünschten Konzentration der wässrigen Copolymer-Lösung.

Ein weiterer Gegenstand der vorliegenden Erfindung besteht darin, Hydrogel-Kontaktlinsen mit endgültiger Geometrie und endgültigem Wassergehalt herzustellen, die aus wässriger Lösung innerhalb Sekunden erhältlich sind, umfassend die Schritte, dass ein statistisches Copolymer in Wasser gelöst und dann auf geeignete Art, z.B. in einer Form, vernetzt wird. Die offensichtlichen Vorteile sind:
Restmonomere können auf der Stufe des unvernetzten Copolymers entfernt werden;
der Umsatz bei der Vernetzung ist wesentlich kleiner, da das Netzwerk aus Polymeren und nicht aus Monomeren aufgebaut wird;
die Reaktionszeiten sind sehr kurz, in der Regel nicht länger als 1 Minute und typischerweise kürzer als 20 Sekunden; und
eine zeitintensive Extraktion der Kontaklinse mit Wasser ist nicht mehrzwingend, da bereits in Wasser vernetzt werden kann.

Für die Vernetzung eines erfindungsgemässen Copolymers wird daher vorteilhafterweise eine wässrige Lösung hergestellt. Wurde bei der Synthese eines Copolymers ein Lösungsmittel verwendet, kann dieses zuerst vollständig oder aber erst nach Zugabe einer entsprechenden Wassermenge entfernt werden. Die Konzentration einer Copolymer-Lösung wird vorzugsweise so eingestellt, dass der Wassergehalt der Lösung dem einer fertigen Kontaktlinse möglichst nahe kommt. In einem bevorzugten Herstellungsverfahren entspricht der Wassergehalt einer wässrigen Copolymer-Lösung dem endgültigen Wassergehalt eines vernetzten Copolymers, also eines Hydrogels.

Die Vernetzung eines Copolymers zum Hydrogel erfolgt als unabhängiger Schritt und kann auf unterschiedliche Arten ausgeführt werden.

Eine erste Methode besteht darin, ein erfindungsgemässes Copolymer in geeigneter Form energiereicher Strahlung auszusetzen, z.B. Elektronen- und Gammastrahlen, sowie aktinischer oder UV-Strahlung, die Radikale im Copolymer erzeugen. Diese Radikale können zu vernetzten Copolymeren abreagieren. Bei dieser Vernetzungsmethode werden keine speziellen Anforderungen an die Natur eines unvernetzten erfindungsgemässen Copolymers gesetzt.

Eine andere Möglichkeit besteht darin, für die Vernetzung einerseits und für den synthetischen Aufbau eines statistischen Copolymers andererseits, verschiedene Reaktionsmechanismen zu verwenden. Beispielhaft lässt sich hier nennen, dass ein Copolymer mit einer radikalischen Polymerisation mit thermischer Initiierung aufgebaut wird, wobei im Copolymer ein Monomer-Baustein mit eingebaut wird, der erst bei UV-Bestrahlung vernetzen kann, z.B. durch eine [2+2] Cycloaddition. Dies kann z.B. durch ein N-Methacryl substituiertes Maleimid erfolgen, dessen Methacryl-Gruppe z.B. mit Vinylpyrrolidon und einem weiteren verschiedenartigen Vinylmonomer copolymerisiert ist.

Eine weitere Möglichkeit besteht darin, dass ein Copolymer, das ein funktionelles Vinylmonomer (b) als Baustein enthält, zunächst mit einem reaktiven Monomer (c) modifiziert wird. Definitionsgemäss bleibt nach einer solchen Modifikation die vinylische Gruppe des reaktiven Monomers (c) erhalten. Ein so modifiziertes Copolymer kann nun z.B. mit UV-Licht geeigneter Wellenlänge, z.B. in Gegenwart eines Photoinitiators, vernetzt werden.

Eine bevorzugte Möglichkeit der Vernetzung ist die Photovernetzung von gemäss Anpruch 1 offenbarten Copolymeren; speziell bevorzugt ist die Photovernetzung von gemäss Anpruch 1 offenbarten Copolymeren, die mit einem reaktiven Monomer (c) modifiziert sind.

Bei der Photovernetzung wird geeigneterweise ein Photoinitiator zugesetzt, der eine radikalische Vernetzung initiieren kann. Beispiele hierfür sind dem Fachmann geläufig, speziell können als geeignete Photoinitiatoren Benzoinmethylether, 1-Hydroxycyclohexylphenylketon, Darocur und Irgacure-Typen, bevorzugt Darocur 1173® und Irgacure 2959® genannt werden. Die Vernetzung kann dann durch aktinische Strahlung, wie z.B. UV-Licht geeigneter Wellenlänge ausgelöst werden.

Auch geeignet sind solche Photoinitiatoren, die bereits vor dem Vernetzungsschritt im Copolymer eingebaut werden. Beispiele speziell geeigneter Photoinitiatoren sind Derivate von Irgacure 2959®), die beispielsweise mit Methacrylsäure verestert sind. Eine mit z.B. Irgacur 2959® veresterte Methacrylsäure kann nun als spezielles Monomer in ein Copolymer eingebaut werden. Ein solches Copolymer ist nun geeignet, direkt, ohne Zusatz eines Photoinitiators, vernetzt zu werden.

Eine Vernetzung wird geeigneterweise in einem Lösungsmittel durchgeführt. Als Lösungsmittel sind grundsätzlich alle Lösungsmittel geeignet, die Copolymere lösen, z.B. Wasser, Alkohole wie Niederalkanole, z.B. Ethanol oder Methanol, ferner Carbonsäureamide, wie Dimethylformamid, oder Dimethylsulfoxid, ebenso Gemische von geeigneten Lösungsmitteln, wie z.B. Gemische von Wasser mit einem Alkohol, wie z.B. ein Wasser/Ethanol- oder ein Wasser/Methanol-Gemisch.

Die Vernetzung erfolgt vorzugsweise unmittelbar aus einer wässrigen Lösung eines erfindungsgemässen Copolymers heraus. Eine eben genannte, wässrige Lösung kann auch direkt als Resultat eines bevorzugten Reinigungsschrittes, z.B. einer Ultrafiltration, erhalten werden kann. Beispielsweise kann eine Vernetzung, bevorzugt eine Photovernetzung, einer etwa 10 bis 40 %-igen wässrigen Lösung vorgenommen werden.

Ein weiterer Gegenstand der vorliegenden Erfindung ist ein Hydrogel, das dadurch gekennzeichnet ist, dass es im wesentlichen besteht aus einem gemäss Anspruch 1 offenbarten Copolymer in vernetzter Form.

Ein bevorzugter Gegenstand ist ein Hydrogel, im wesentlichen bestehend aus einem gemäss Anspruch 1 offenbarten Copolymer in vernetzter Form, wobei es sich um eine Kontaktlinse handelt.

Ein weiterer Gegenstand der vorliegenden Erfindung ist eine Kontaktlinse erhältlich durch Vernetzen eines gemäss Anspruch 1 offenbarten Copolymers.

Die nachfolgend aufgefiihrten Beispiele dienen der weiteren Illustration der vorliegenden Erfindung. Temperaturen sind in Grad Celsius angegeben.

Die im Zusammenhang mit den nachfolgend aufgeführten Beispielen verwendeten Abkürzungen "poly" und "stat" bedeuten, dass es sich um statistische (stat) Copolymere (poly) handelt.

### Beispiel 1

### Synthese von Poly(N-vinylpyrrolidon-stat-methylmethacrylat)

In einen 500 ml Braunglas-Dreihalskolben mit Rührwerk, Claisen-Aufsatz und Rückflusskühler gibt man 15.26 g (0.14 mol) N-Vinylpyrrolidon, 0.25 g (2.5 mmol) Methylmethacrylat und 60.55 g Methanol. Man spült die beschickte Apparatur über den Rückflusskühler mit Stickstoff, erwärmt den Ansatz unter Stickstoff bis zum Sieden und gibt mit einer Spritze über ein Septum eine Lösung aus 31.8 mg (0.194 mmol) AIBN und 1.5 g Methanol zu dem Ansatz. Über zwei Dosiereinheiten Mikrolab M der Firma Hamilton dosiert man eine Lösung A bestehend aus 40.0 g (0.36 mol) N-Vinylpyrrolidon, 18.02 g (0.18 mol) Methylmethacrylat und 232.06 g Methanol mit einer Rate von 100 µl pro Minute und eine Lösung B bestehend aus 79.5 mg (0.484 mmol) AIBN und 8.95 ml Methanol mit einer Rate von 9 µl pro 99 Sekunden zu. Nach 24 Stunden stoppt man die Zudosierung, lässt den Ansatz weitere 16 Stunden unter Rückfluss reagieren, kühlt ihn auf Raumtemperatur ab und giesst die Polymerlösung zu einer Folie, die anschließend bei 60°C und 10 Pa (0.1 mbar) im Vakuumtrockenschrank von Restmonomeren und Lösemittel befreit wird.
Ausbeute: Ca. 80 - 85 % der eingesetzten Monomeren.
Das Polymer löst sich bei Raumtemperatur in H₂O, CH₃OH und C₂H₅OH (jeweils zu 20 Gew.%).

### Beispiel 2

### Synthese von Poly(N-vinylpyrrolidon-stat-methylmethacrylat-stat-glycidylmethacrylat) Terpolymeren.

In einen 500 ml Braunglas-Dreihalskolben mit Rührwerk, Claisen-Aufsatz und Rückflusskühler gibt man 15.26 g (0.14 mol) N-Vinylpyrrolidon, 0.25 g (2.5 mmol) Methylmethacrylat und 60.55 g Methanol. Man spült die beschickte Apparatur über den Rückflusskühler mit Stickstoff, erwärmt den Ansatz unter Stickstoff bis zum Sieden und gibt mit einer Spritze über ein Septum eine Lösung aus 31.8 mg (0.194 mmol) AIBN und 1.5 g Methanol zu dem Ansatz. Über zwei Dosiereinheiten Mikrolab M der Firma Hamilton dosiert man eine Lösung A bestehend aus 40.0 g (0.36 mol) N-Vinylpyrrolidon, 9.01 g (89.98 mmol) Methylmethacrylat, 12.8 g (89.98 mmol) Glycidylmethacrylat und 232.06 g Methanol mit einer Rate von 200 µl pro Minute und eine Lösung B bestehend aus 79.5 mg (0.484 mmol) AIBN und 8.95 ml Methanol mit einer Rate von 9 µl pro 99 Sekunden zu. Nach 24 Stunden stoppt man die Zudosierung, lässt den Ansatz weitere 16 Stunden unter Rückfluss reagieren, kühlt auf Raumtemperatur ab und giesst die Polymerlösung zu einer Folie. Die Folie wird anschliessend bei 60°C und 10 Pa (0.1 mbar) im Vakuumtrockenschrank von Restmonomeren und Lösemittel befreit.
Ausbeute: Ca. 80 - 85 % der eingesetzten Monomeren.
Die Polymere lösen sich bei Raumtemperatur in H₂O, CH₃OH und C₂H₅OH (jeweils zu 20 Gew.%).

### Beispiel 3

### Synthese von Poly(N-vinylpyrrolidon-stat-methylmethacrylat-stat-hydroxyethylmethacrylat) Terpolymeren.

In einen 500 ml Braunglas-Dreihalskolben mit Rührwerk, Claisen-Aufsatz und Rückflusskühler gibt man 15.26 g (0.14 mol) N-Vinylpyrrolidon, 0.25 g (2.5 mmol) Methylmethacrylat und 60.55 g Methanol. Man spült die beschickte Apparatur über den Rückflusskühler mit Stickstoff, erwärmt den Ansatz unter Stickstoff bis zum Sieden und gibt mit einer Spritze über ein Septum eine Lösung aus 31.8 mg (0.194 mmol) AIBN und 1.5 g Methanol zu dem Ansatz. Über zwei Dosiereinheiten Mikrolab M der Firma Hamilton dosiert man eine Lösung A bestehend aus 40.0 g (0.36 mol) N-Vinylpyrrolidon, 9.01 g (89.98 mmol) Methylmethacrylat, 11.71 g (89.98 mmol) Hydroxyethylmethacrylat und 232.06 g Methanol mit einer Rate von 200 µl pro Minute und eine Lösung B bestehend aus 79.5 mg (0.484 mmol) AIBN und 8.95 ml Methanol mit einer Rate von 9 µl pro 99 Sekunden zu. Nach 24 Stunden stoppt man die Zudosierung, lässt den Ansatz weitere 16 Stunden unter Rückfluss reagieren, kühlt auf Raumtemperatur ab und giesst die Polymerlösung zu einer Folie. Die Folie wird anschliessend bei 60°C und 10 Pa (0.1 mbar) im Vakuumtrockenschrank von Restmonomeren und Lösemittel befreit.
Ausbeute: Ca. 80 - 85 % der eingesetzten Monomeren.
Die Polymere lösen sich bei Raumtemperatur in H₂O, CH₃OH und C₂H₅OH (jeweils zu 20 Gew.%).

### Beispiel 4

### Synthese von Poly(N-vinylpyrrolidon-stat-methylmethacrylat-stat-cyclohexenoxidmethacrylat) Terpolymeren.

In einen 500 ml Braunglas-Dreihalskolben mit Rührwerk, Claisen-Aufsatz und Rückflusskühler gibt man 15.26 g (0.14 mol) N-Vinylpyrrolidon, 0.25 g (2.5 mmol) Methylmethacrylat und 60.55 g Methanol. Man spült die beschickte Apparatur über den Rückflusskühler mit Stickstoff, erwärmt den Ansatz unter Stickstoff bis zum Sieden und gibt mit einer Spritze über ein Septum eine Lösung aus 31.8 mg (0.194 mmol) AIBN und 1.5 g Methanol zu dem Ansatz. Über zwei Dosiereinheiten Mikrolab M der Firma Hamilton dosiert man eine Lösung A bestehend aus 40.0 g (0.36 mol) N-Vinylpyrrolidon, 9.01 g (89.98 mmol) Methylmethacrylat, 16.4 g (89.98 mmol) Cyclohexenoxidmethacrylat und 232.06 g Methanol mit einer Rate von 200 µl pro Minute und eine Lösung B bestehend aus 79.5 mg (0.484 mmol) AIBN und 8.95 ml Methanol mit einer Rate von 9 µl pro 99 Sekunden zu. Nach 24 Stunden stoppt man die Zudosierung, lässt den Ansatz weitere 16 Stunden unter Rückfluss reagieren, kühlt auf Raumtemperatur ab und giesst die Polymerlösung zu einer Folie. Die Folie wird anschliessend bei 60°C und 10 Pa (0.1 mbar) im Vakuumtrockenschrank von Restmonomeren und Lösemittel befreit.
Ausbeute: Ca. 80 - 85 % der eingesetzten Monomeren.
Die Polymere lösen sich bei Raumtemperatur in H₂O, CH₃OH und C₂H₅OH (jeweils zu 20 Gew.%).

### Beispiel 5

### Synthese von Poly(N-vinylpyrrolidon-stat-methylmethacrylat-stat-DMI-O-MA) Terpolymeren

In einen 500 ml Braunglas-Dreihalskolben mit Rührwerk, Claisen-Aufsatz und Rückflusskühler gibt man 15.26 g (0.14 mol) N-Vinylpyrrolidon, 0.25 g (2.5 mmol) Methylmethacrylat sowie 60.55 g Methanol. Man spült die beschickte Apparatur über den Rückflusskühler mit Stickstoff, erwärmt den Ansatz unter Stickstoff bis zum Sieden und gibt mit einer Spritze über ein Septum eine Lösung aus 31.8 mg (0.194 mmol) AIBN und 1.5 g Methanol zu dem Ansatz. Über eine Dosiereinheit Mikrolab M der Firma Hamilton dosiert man eine Lösung bestehend aus 40.0 g (0.36 mol) N-Vinylpyrrolidon, 9.01 g (89.98 mmol) Methylmethacrylat, 25.3 g (89.98 mmol) DMI-O-MA und 232.06 g Methanol mit einer linear abnehmenden Zudosierungsrate (Anfangsrate von 100 µl pro Minute auf 3 µl pro Minute abnehmend). Nach 24 Stunden stoppt man die Zudosierung, lässt den Ansatz weitere 16 Stunden unter Rückfluss reagieren, kühlt ihn auf Raumtemperatur ab und giesst die Polymerlösung zu einer Folie. Die Folie wird anschliessend bei 60°C und 10 Pa (0.1 mbar) im Vakuumtrockenschrank von Restmonomeren und Lösemittel befreit.
Ausbeute: Ca. 80 - 85 % der eingesetzten Monomeren.
Das Polymer löst sich bei Raumtemperatur in H₂O, CH₃OH und C₂H₅OH (jeweils zu 20 Gew.%).

### Beispiel 6

### Synthese von Poly(N-vinylpyrrolidon-stat-methylmethacrylat-stat-2-hydroxyethylmethacrylat) Terpolymeren

In einen 500 ml Braunglas-Dreihalskolben mit Rührwerk, Claisen-Aufsatz und Rückflusskühler gibt man 15.26 g (0.14 mol) N-Vinylpyrrolidon, 0.25 g (2.5 mmol) Methylmethacrylat sowie 60.55 g Methanol. Man spült die beschickte Apparatur über den Rückflusskühler mit Stickstoff, erwärmt den Ansatz unter Stickstoff bis zum Sieden und gibt mit einer Spritze über ein Septum eine Lösung aus 31.8 mg (0.194 mmol) AIBN und 1.5 g Methanol zu dem Ansatz. Über eine Dosiereinheit Mikrolab M der Firma Hamilton dosiert man eine Lösung bestehend aus 40.0 g (0.36 mol) N-Vinylpyrrolidon, 9.01 g (89.98 mmol) Methylmethacrylat, 11.71 g (89.98 mmol) 2-Hydroxyethylmethacrylat und 232.06 g Methanol mit einer linear abnehmenden Zudosierungsrate (Anfangsrate von 200 µl pro Minute auf 6 µl pro Minute abnehmend). Nach 24 Stunden stoppt man die Zudosierung, lässt den Ansatz weitere 16 Stunden unter Rückfluss reagieren, kühlt ihn auf Raumtemperatur ab und giesst die Polymerlösung zu einer Folie. Die Folie wird anschliessend bei 60°C und 10 Pa (0.1 mbar) im Vakuumtrockenschrank von Restmonomeren und Lösemittel befreit.
Ausbeute: Ca. 80 - 85 % der eingesetzten Monomeren.
OH-Gruppengehalt: ca 1.00 (mmol OH)/g
Das Polymer löst sich bei Raumtemperatur in H₂O, CH₃OH und C₂H₅OH (jeweils zu 20 Gew.%).

### Beispiel 7

### Synthese von Poly(N-vinylpyrrolidon-stat-methylmethacrylat-stat-2-hydroxyethylmethacrylat-stat-1,1-dimethyl-2-oxo-2-{4-[[[(3,5,5-trimethyl-3-methylaminomethylcyclohexyl)-amino]-carbonyl]- ethoxyl-phenoxy}-ethyl-methacrylat)

In einen 250 ml Braunglas-Dreihalskolben mit Rührwerk, Claisen-Aufsatz und Rückflusskühler gibt man 3.92 g (35.3 mmol) N-Vinylpyrrolidon, 0.031 g (0.312 mmol) Methylmethacrylat, 0.045 g (0.35 mmol) 2-Hydroxyethylmethacrylat, 0.007 g (0.012 mmol) 1,1-Dimethyl-2-oxo-2-{4-[[[(3,5,5-trimethyl-3-methylaminomethyl-cyclohexyl)-amino]-carbonyl]-ethoxy]-phenoxy}-ethyl-methacrylat sowie 15.97 g Methanol. Man spült die beschickte Apparatur über den Rückflusskühler mit Stickstoff, erwärmt den Ansatz unter Stickstoff bis zum Sieden und gibt mit einer Spritze über ein Septum eine Lösung aus 8.0 mg (0.049 mmol) AIBN und 0.38 g Methanol zu dem Ansatz. Über eine Dosiereinheit Mikrolab M der Firma Hamilton dosiert man eine Lösung bestehend aus 5.0 g (44.99 mmol) N-Vinylpyrrolidon, 1.13 g (11.25 mmol) Methylmethacrylat, 1.46 g (11.24 mmol) 2-Hydroxyethylmethacrylat, 0.46 g (0.79 mmol) 1,1-Dimethyl-2-oxo-2-{4-[[[(3,5,5-trimethyl-3-methylaminomethyl-cyclohexyl)-amino]-carbonyl]-ethoxy]-phenoxy}-ethyl-methacrylat und 32.18 g Methanol mit einer linear abnehmenden Zudosierungsrate (Anfangsrate von 100 µl pro Minute auf 10 µl pro Minute abnehmend). Nach 24 Stunden stoppt man die Zudosierung, lässt den Ansatz weitere 16 Stunden unter Rückfluss reagieren, kühlt ihn auf Raumtemperatur ab. Diese Lösung wird in 450 ml Aceton gegeben, wobei das Polymer als klebriger Feststoff ausfällt. Die überstehende Lösung wird abdekantiert und der Rückstand im Vakuumtrockenschrank getrocknet. Man erhält so die im Titel genannte Verbindung.

### Beispiel 8

### Synthese von Poly(N-vinylpyrrolidon-stat-2-hydroxyethylmethacrylat-stat-glycidyl-methacrylat)

In einen 500 ml Braunglas-Dreihalskolben mit Rührwerk, Claisen-Aufsatz und Rückflusskühler gibt man 15.26 g (0.14 mol) N-Vinylpyrrolidon, 0.33 g (2.5 mmol) 2-Hydroxyethylmethacrylat und 60.55 g Methanol. Man spült die beschickte Apparatur über den Rückflusskühler mit Stickstoff, erwärmt den Ansatz unter Stickstoff bis zum Sieden und gibt mit einer Spritze über ein Septum eine Lösung aus 31.8 mg (0.194 mmol) AIBN und 1.5 g Methanol zu dem Ansatz. Über zwei Dosiereinheiten Mikrolab M der Firma Hamilton dosiert man eine Lösung A bestehend aus 40.0 g (0.36 mol) N-Vinylpyrrolidon, 11.7 g (89.98 mmol) 2-Hydroxyethylmethacrylat, 12.8 g (89.98 mmol) Glycidylmethacrylat und 232.06 g Methanol mit einer Rate von 200 µl pro Minute und eine Lösung B bestehend aus 79.5 mg (0.48 mmol) AIBN und 8.95 ml Methanol mit einer Rate von 9 µl pro 99 Sekunden zu. Nach 24 Stunden stoppt man die Zudosierung, lässt den Ansatz weitere 16 Stunden unter Rückfluss reagieren, kühlt ihn auf Raumtemperatur ab und giesst die Polymerlösung zu einer Folie. Die Folie wird anschliessend bei 60°C und 10 Pa (0.1 mbar) im Vakuumtrockenschrank von Restmonomeren und Lösemittel befreit.
Ausbeute: Ca. 80-85 % der eingesetzen Monomeren.
Das Polymer löst sich bei Raumtemperatur in H₂O, CH₃OH und C₂H₅OH (jeweils zu 20 Gew.%).

### Beispiel 9

### Synthese von Poly(N-vinylpyrrolidon-stat-2-hydroxyethylmethacrylat-stat-cyclohexen-oxidacrylat)

In einen 500 ml Braunglas-Dreihalskolben mit Rührwerk, Claisen-Aufsatz und Rückflusskühler gibt man 15.26 g (0.14 mol) N-Vinylpyrrolidon, 0.33 g (2.5 mmol) 2-Hydroxyethylmethacrylat und 60.55 g Methanol. Man spült die beschickte Apparatur über den Rückflusskühler mit Stickstoff, erwärmt den Ansatz unter Stickstoff bis zum Sieden und gibt mit einer Spritze über ein Septum eine Lösung aus 31.8 mg (0.194 mmol) AIBN und 1.5 g Methanol zu dem Ansatz. Über zwei Dosiereinheiten Mikrolab M der Firma Hamilton dosiert man eine Lösung A bestehend aus 40.0 g (0.36 mol) N-Vinylpyrrolidon, 11.7 g (89.98 mmol) 2-Hydroxyethylmethacrylat, 16.4 g (89.98 mmol) Cyclohexenoxidacrylat und 232.06 g Methanol mit einer Rate von 200 µl pro Minute und eine Lösung B bestehend aus 79.5 mg (0.48 mmol) AIBN und 8.95 ml Methanol mit einer Rate von 9 µl pro 99 Sekunden zu. Nach 24 Stunden stoppt man die Zudosierung, lässt den Ansatz weitere 16 Stunden unter Rückfluss reagieren, kühlt ihn auf Raumtemperatur ab und giesst die Polymerlösung zu einer Folie. Die Folie wird anschliessend bei 60°C und 10 Pa (0.1 mbar) im Vakuumtrockenschrank von Restmonomeren und Lösemittel befreit.
Ausbeute: Ca. 80 - 85 % der eingesetzten Monomeren.
Das Polymer löst sich bei Raumtemperatur in H₂O, CH₃OH und C₂H₅OH (jeweils zu 20 Gew.%).

### Beispiel 10

### Funktionalisierung von Poly(N-vinylpyrrolidon-stat-glycidylmethacrylat) mit Methacrylsäure

Zwei Portionen zu je 3.0 g des Polymeren aus Beispiel 3 (2.56 mmol Epoxidgruppen) werden in 30 g DMF (wasserfrei) gelöst und jeweils mit ca. 11 mg Hydrochinon stabilisiert. Dann wird je 442.9 mg (5.12 mmol) Methacrylsäure zugegeben, (jeweils die zweifach molare Menge bezogen auf den Epoxidgruppengehalt, den man durch eine Titration des Polymeren in Eisessig in Gegenwart von Tetrabutylammoniumbromid mit 0.1 molarer Perchlorsäure bestimmt) und erhitzt auf 100°C. Man gibt danach 3.33 g Al₂O₃ zur einen Lösung und 4.4 mg FeCl₃ zur zweiten Lösung, und leitet einen trockenen Luftstrom über die Reaktionslösungen. Nach 6 bis 10 Stunden Reaktionszeit werden unlösliche Anteile heiss über einen Büchnertrichter abfiltriert, und von den Lösungen wird erneut der Epoxidgehalt durch Titration bestimmt. Die flüchtigen Anteile der Reaktionslösungen werden im Hochvakuum bei 40°C abdestilliert und die Rückstände in Wasser gelöst. Die wässrigen Lösungen werden durch Ultrafiltration von Restmonomeren befreit und anschliessend auf die gewünschten Feststoffgehalte aufkonzentriert.
Umsetzungsgrad mit Al₂O₃ : ca. 33 %
Umsetzungsgrad mit FeCl₃ : 17-18 %
Das Polymer löst sich bei Raumtemperatur in H₂O, CH₃OH und C₂H₅OH (jeweils zu 20 Gew.%).

### Beispiel 11

### Funktionalisierung von Poly(N-vinylpyrrolidon-stat-glycidylmethacrylat) mit 2-Hydroxyethylmethacrylat

Zwei Portionen zu je 3.0 g des Polymeren aus Beispiel 3 (2.56 mmol Epoxidgruppen) werden in 30 g DMF (wasserfrei) gelöst und jeweils mit ca. 11 mg Hydrochinon stabilisiert. Dann wird je 668.2 mg (5.12 mmol) 2-Hydroxyethylmethacrylat zugegeben, (jeweils die zweifach molare Menge bezogen auf den Epoxidgruppengehalt, den man durch eine Titration des Polymeren in Eisessig in Gegenwart von Tetrabutylammoniumbromid mit 0.1 molarer Perchlorsäure bestimmt) und erhitzt auf 100°C. Man gibt danach 3.33 g Al₂O₃ zur einen Lösung und 7.3 mg FeCl₃ zur zweiten Lösung, und leitet einen trockenen Luftstrom über die Reaktionslösungen. Nach 6 bis 10 Stunden Reaktionszeit werden unlösliche Anteile heiss über einen Büchnertrichter abfiltriert, und von den Lösungen wird erneut der Epoxidgehalt durch Titration bestimmt. Die flüchtigen Anteile der Reaktionslösungen werden im Hochvakuum bei 40°C abdestilliert und die Rückstände in Wasser gelöst. Die wässrigen Lösungen werden durch Ultrafiltration von Restmonomeren befreit und anschliessend auf die gewünschten Feststoffgehalte aufkonzentriert.
Umsetzungsgrad mit Al₂O₃ : ca. 33 %
Umsetzungsgrad mit FeCl₃ : 17-18 %
Das Polymer löst sich bei Raumtemperatur in H₂O, CH₃OH und C₂H₅OH (jeweils zu 20 Gew.%).

### Beispiel 12

### Funktionalisierung von Poly(N-vinylpyrrolidon-stat-methylmethacrylat-stat-2-hydroxyethylmethacrylat) mit Methacrylsäurechlorid

2.18 g des im Titel genannten Polymers aus Beispiel 6 (2.18 mmol OH-Gruppen) werden in 30.63 g Dimethylacetamid gelöst und mit 5 mg Hydrochinon sowie 419 µl (4.29 mmol) Methacrylsäurechlorid versetzt. Man erhitzt das Reaktionsgemisch für 4 Stunden auf 80°C, lässt nach dieser Zeit den Ansatz abkühlen und versetzt ihn mit 100 ml Aceton. Diese Lösung wird in 400 ml Aceton gegeben, wobei das Polymer als klebriger Feststoff ausfällt. Die überstehende Lösung wird abdekantiert und der Rückstand im Vakuumtrockenschrank getrocknet.
Ausbeute nach der Ausfällung: 1.39 g (53 % d. Th.)
Das Polymer ist löslich in H₂O, CH₃OH und C₂H₅OH (jeweils zu 30 Gew.%).

### Beispiel 13

### Funktionalisierung von Poly(N-vinylpyrrolidon-stat-methylmethacrylat-stat-2-hydroxyethylmethacrylat-stat-1,1-dimethyl-2-oxo-2-{4-[[[(3,5,5-trimethyl-3-methylaminomethylcyclohexyl)- amino]-carbonyl]-ethoxy]-phenoxy}-ethyl-methacrylat) mit Methacrylsäurechlorid

2.01 g des im Titel genannten Polymers aus Beispiel 7 (2.98 mmol OH-Gruppen) werden in 30.13 g Dimethylacetamid gelöst und mit 5 mg Hydrochinon sowie 583 µl (5.97 mmol) Methacrylsäurechlorid versetzt. Man erhitzt das Reaktionsgemisch für 4 Stunden auf 80 °C. Nach dieser Zeit lässt man den Ansatz abkühlen und versetzt ihn mit 100 ml Aceton. Diese Lösung wird in 400 ml Aceton gegeben, wobei das Polymer als klebriger Feststoff ausfällt. Die überstehende Lösung wird abdekantiert und der Rückstand im Vakuumtrockenschrank getrocknet.
Ausbeute nach der Ausfällung : 1.39 g (53 % d. Th.)

### Beispiel 14

### Vernetzung des Polymeren aus Beispiel 12

Von dem funktionalisierten Polymer aus Beispiel 12 stellt man eine 18 %-ige (a) sowie eine 30 %-ige (b) wässrige Lösung her und versetzt beide mit je 0,3 % (bezüglich Polymermenge) Darocur 2959®. Diese Lösungen gibt man in Polypropylen(PP)-Formen mit Linsengeometrie und bestrahlt die gefüllten Formen 12 Sekunden mit einer 500 W Hg-Hochdrucklampe (z.B. Oriel Typ Nr. 6285). Dann werden die vernetzten Copolymere in physiologischer Kochsalzlösung gequollen, wobei aus
a) 18 Gew.% Sol (unvernetzt) ein Hydrogel mit 90 Gew.% Wasser, und aus
b) 30 Gew.% Sol (unvernetzt) ein Hydrogel mit 83 Gew.% Wasser entsteht.
Die Hydrogele a) und b) sind fertige Kontaktlinsen.

### Beispiel 15

### Vernetzung des Polymeren aus Beispiel 13

Von dem funktionalisierten Polymer aus Beispiel 13 stellt man eine 10 %-ige wässrige Lösung her. Diese Lösung gibt man in PP-Formen mit Linsengeometrie und bestrahlt die gefüllten Formen 60 Sekunden mit einer 500 W Hg-Hochdrucklampe (z.B. Oriel Typ Nr. 6285).
Es entstehen vernetzte Hydrogele in Form von Kontaktlinsen.

### Beispiel 16

### Funktionalisierung von Poly(N-vinylpyrrolidon-stat-methylmethacrylat) mit 2-Hydroxyethylmethacrylat

4.0 g des im Titel genannten Polymers aus Beispiel 1 und 54 mg Hydrochinon werden in 16 g Dimethylacetamid gelöst und mit 18.22 g (0.14 mol) 2-Hydroxyethylmethacrylat sowie 23.6 mg (0.037 mmol) Dibutylzinndilaurat versetzt. Man gibt den Ansatz in eine Destillationsapparatur, leitet einen schwachen getrockneten Luftstrom durch die Reaktionslösung und erwärmt sie für 18.5 Stunden auf 85°C. Der Ansatz wird auf Raumtemperatur abgekühlt und das Polymer durch Zugabe von ca. 80 ml Aceton ausgefällt. Man dekantiert die überstehende Lösung ab und trocknet das Polymer in einem Vakuumexsikkator bei Raumtemperatur und 10 Pa.
Ausbeute : Ca. 76 % der eingesetzten Monomeren.
Das Polymer ist in H₂O, CH₃OH und C₂H₅OH löslich (jeweils zu 30 Gew.%).

### Beispiel 17

### Vernetzung des Polymeren aus Beispiel 16

1.00 g des Polymeren aus Beispiel 16 wird in 2.33 ml Wasser gelöst (ca. 30 Gew.%) und mit 16.7 mg Darocur® 2959 versetzt. Man gibt diese Lösung in eine PP-Form mit Linsengeometrie und bestrahlt die geschlossene Form 1 Minuten mit einer Hg-Hochdrucklampe. Es entsteht ein Hydrogel als Formkörper.

### Beispiel 18

### Synthese von Poly(N-vinylpyrrolidon-stat-2-hydroxyethylmethacrylat-stat-2-aminoethylmethacrylat-hydrochlorid)

In einen 500 ml Braunglas-Dreihalskolben mit Rührwerk, Claisen-Aufsatz und Rückflusskühler gibt man 15.26 g (0.14 mol) N-Vinylpyrrolidon, 0.22 g (1.67 mmol) 2-Hydroxyethylmethacrylat, 0.28 g (0.83 mmol) einer 50 %-igen wässrigen Lösung von 2-Aminoethylmethacrylat-hydrochlorid und 60.55 g Methanol. Man spült die beschickte Apparatur über den Rückflusskühler mit Stickstoff, erwärmt den Ansatz unter Stickstoff bis zum Sieden und gibt mit einer Spritze über ein Septum eine Lösung aus 31.8 mg (0.194 mmol) AIBN und 1.5 g Methanol zu dem Ansatz. Über zwei Dosiereinheiten Mikrolab M der Firma Hamilton dosiert man eine Lösung A bestehend aus 40.0 g (0.36 mol) N-Vinylpyrrolidon, 15.6 g (120 mmol) 2-Hydroxyethylmethacrylat, 19.87 g (60 mmol) einer 50 %-igen wässrigen Lösung von 2-Aminoethylmethacrylat-hydrochlorid und 232.06 g Methanol mit einer Rate von 200 µl pro Minute und eine Lösung B bestehend aus 79.5 mg (0.48 mmol) AIBN und 8.95 ml Methanol mit einer Rate von 9 µl pro 99 Sekunden zu. Nach 24 Stunden stoppt man die Zudosierung, lässt den Ansatz weitere 16 Stunden unter Rückfluss rühren, kühlt dann auf Raumtemperatur ab und trennt die Restmonomeren und Lösungsmittel durch Ultrafiltration über eine 3 kDalton PES (Polyethersulfon) Membran unter 2.5 · 10⁵ Pa Arbeitsdruck ab. Dabei wird das Lösungsmittel durch Wasser ersetzt.
Ausbeute: Ca. 80 - 85 % der eingesetzten Monomeren.
Das Polymer löst sich bei Raumtemperatur in H₂O, CH₃OH und C₂H₅OH (jeweils zu 30 Gew.%).

### Beispiel 19

### Funktionalisierung von Poly(N-vinylpyrrolidon-stat-2-hydroxyethylmethacrylat-stat-2-aminoethylmethacrylat-hydrochlorid)

1.0 g des Polymeren aus Beispiel 18 wird in 2.33 ml Wasser gelöst. Diese Lösung wird mit 0.1 N Natronlauge auf pH 10 titriert, und anschliessend unter Rühren mit 0.036 g (0.23 mmol) Isocyanatoethylmethacrylat versetzt. Der Reaktionsumsatz wird durch Aufzeichnung des pH-Wertes kontrolliert (pH-Monitoring).

### Beispiel 20

### Vernetzung von mit Isocyanatoethylmethacrylat funktionalisiertem Poly(N-vinylpyrrolidon-stat-2-hydroxyethylmethacrylat-stat-2-aminoethylmethacrylat-hydrochlorid)

Die wässrige Polymerlösung aus Beispiel 19 wird mit 16.7 mg Irgacur 2959® versetzt und dann in PP-Formen mit Linsengeometrie gegeben. Die geschlossenen PP-Formen werden dann für 10 Sekunden mit einer 500 W Hg-Hochdrucklampe bestrahlt. Man erhält so fertige Kontaktlinsen als Hydrogele mit einem Wassergehalt von etwa 85 %.

## Patentansprüche

1. Ein wasserlösliches vernetzbares Copolymer, enthaltend ein Copolymerisationsprodukt eines Monomerengemisches bestehend im wesentlichen aus 30 - 95 Molprozent eines Vinyllactams (a) und 5 - 70 Molprozent von mindestens einem Vinylmonomer (b), ausgewählt aus einer Gruppe von hydrophoben, hydrophilen und funktionellen Vinylmonomeren, dadurch gekennzeichnet, dass die Monomeren im Copolymer als statistisch verteilte Bausteine gemäss der Lewis-Mayo Theorie vorliegen, wobei im Copolymer ein funktionelles Vinylmonomer (b) als Baustein enthalten ist, und dieser mit einem reaktiven Vinylmonomer (c) modifiziert ist, wobei das reaktive Vinylmonomer (c) unter Erhalt seiner vinylischen Gruppe und unter Ausbildung einer kovalenten Bindung mit einem Baustein eines funktionellen Vinylmonomers verknüpft ist, und wobei der Anteil des reaktiven Vinylmonomers (c) bis zu 50 Molprozent in Bezug auf die Monomersumme aus Vinylmonomer (b) und (c) beträgt.

2. Ein Copolymer gemäss Anspruch 1, enthaltend ein Copolymerisationsprodukt eines Monomerengemisches bestehend aus
50 - 90 Molprozent eines Vinyllactams (a) und
10 - 50 Molprozent von mindestens einem Vinylmonomer (b) und ein reaktives Vinylmonomer (c).

3. Ein Copolymer gemäss Anspruch 1, enthaltend ein Copolymerisationsprodukt eines Monomerengemisches bestehend aus
60 - 80 Molprozent eines Vinyllactams (a) und
20 - 40 Molprozent von mindestens einem Vinylmonomer (b) und ein reaktives Vinylmonomer (c).

4. Ein Copolymer gemäss Anspruch 1, wobei das Vinyllactam (a) ein fünf bis siebengliedriger Ring der Formel I ist, 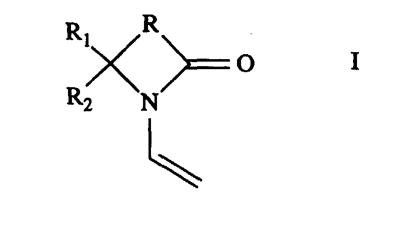 worin R für eine Alkylenbrücke mit 2 bis 8 Kohlenstoffatomen steht, R₁ für Wasserstoff, Niederalkyl, Aryl mit bis zu 10 Kohlenstoffatomen oder Aralkyl oder Alkaryl mit bis zu 14 Kohlenstoffatomen steht, und R₂ für Wasserstoff oder Niederalkyl steht.

5. Ein Copolymer gemäss Anspruch 4, wobei das Vinyllactam (a) ein heterocyclisches Monomer der Formel I ist, das 4 Kohlenstoffatome im heterocyclischen Ring enthält.

6. Ein Copolymer gemäss Anspruch 1, worin das hydrophobe Vinylmonomer (b) ausgewählt ist unter C₁-C₁₈-Alkyl- und C₃-C₁₈-Cycloalkylacrylaten und -methacrylaten, C₃-C₁₈-Alkylacrylamiden und -methacrylamiden, Acrylnitril, Methacrylnitril, Vinyl-C₁-C₁₈-alkanoaten, C₂-C₁₈-Alkenen, C₂-C₁₈-Haloalkenen, Styrol, Niederalkylstyrolen, Niederalkylvinylethern, C₂-C₁₀-Perfluoralkyl-acrylaten und -methacrylaten oder entsprechend partiell fluorierten Acrylaten und Methacrylaten, C₃-C₁₂-Perfluoralkyl-ethylthiocarbonylaminoethyl-acrylaten und -methacrylaten, Acryloxy und Methacryloxy-alkylsiloxanen, N-Vinylcarbazol und C₁-C₁₂-Alkylestern der Maleinsäure, Fumarsäure, Itaconsäure und Mesaconsäure.

7. Ein Copolymer gemäss Anspruch 1, worin das hydrophile Vinylmonomer (b) ausgewählt ist unter durch Hydroxy substituierten Niederalkylacrylaten und -methacrylaten, Acrylamid, Methacrylamid, Niederalkylacrylamiden und -methacrylamiden, ethoxylierten Acrylaten und Methacrylaten, durch Hydroxy substituierten Niederalkylacrylamiden und Methacrylamiden, durch Hydroxy substituierten Niederalkylvinylethern, Natriumethylensulfonat, Natriumstyrolsulfonat, 2-Acrylamido-2-methylpropansulfonsäure, N-Vinylpyrrol, 2- und 4-Vinylpyridin, vinylisch ungesättigten Carbonsäuren mit insgesamt 3 bis 5 Kohlenstoffatomen, Aminoniederalkyl-, Mononiederalkylamino-niederalkyl- und Diniederalkylamino-niederalkylacrylaten und -methacrylaten und Allylalkohol.

8. Ein Copolymer gemäss Anspruch 1, worin das funktionelle Vinylmonomer (b) ausgewählt ist unter durch Hydroxy substituierten Niederalkylacrylaten und -methacrylaten, ethoxylierten Acrylaten und Methacrylaten, Epoxyniederalkyl-acrylaten und -methacrylaten, Epoxycycloalkyl-niederalkylacrylaten und -methacrylaten, durch Hydroxy substituierten Niederalkylacrylamiden und -methacrylamiden, durch Hydroxy substituierten Niederalkylvinylethern, durch Amino oder Hydroxy substituierten Styrolen, Natriumethylensulfonat, Natriumstyrolsulfonat, 2-Acrylamido-2-methylpropansulfonsäure, Acrylsäure, Methacrylsäure, Aminoniederalkyl- und Mononiederalkylamino-niederalkylacrylaten und -methacrylaten, Acryloxy- und Methacryloxy-niederalkyl-maleimiden und Allylalkohol.

9. Ein Copolymer gemäss Anspruch 1, worin eines oder mehrere der Vinylmonomere (b) ausgewählt ist aus einem der Ansprüche 6, 7 und 8.

10. Ein Copolymer gemäss Anspruch 1, worin das reaktive Vinylmonomer (c) ausgewählt ist unter durch Hydroxy substituierten Niederalkylacrylaten und -methacrylaten, durch Hydroxy substituierten Niederalkylacrylamiden und Methacrylamiden, durch Hydroxy substituierten Niederalkylvinylethern, 2-Acrylamid-2-methylpropansulfonsäure, Aminoniederalkyl- und Mononiederalkylamino-niederalkylacrylaten und -methacrylaten, Allylalkohol, Epoxyniederalkylacrylaten und -methacrylaten, Isocyanatoniederalkylacrylaten und -methacrylaten, vinylisch ungesättigten Carbonsäuren mit 3 bis 7 C-Atomen sowie Säurechloriden und Anhydriden davon, durch Amino, Hydroxy oder Isocyanat substituierten Styrolen und Epoxycycloalkyl-niederalkylacrylaten und -methacrylaten.

11. Ein Copolymer gemäss Anspruch 1, worin das Vinyllactam (a) ein heterocyclisches Monomer der Formel I gemäss der Definition in Anspruch 4 ist, das 4 Kohlenstoffatome im heterocyclischen Ring enthält und Vinylmonomer (b) ausgewählt ist unter unsubstituierten oder durch Hydroxy substituierten C₁-C₁₈-Alkylacrylaten und -methacrylaten, Niederalkylacrylamiden und -methacrylamiden und Allylalkohol.

12. Ein Copolymer gemäss Anspruch 1, worin das Vinyllactam (a) ein heterocyclisches Monomer der Formel I gemäss der Definition in Anspruch 4 ist, das 4 Kohlenstoffatome im heterocyclischen Ring enthält und Vinylmonomer (c) ausgewählt ist unter Aminoniederalkyl- und Mononiederalkylamino-niederalkylacrylaten und -methacrylaten, Epoxyniederalkylacrylaten und -methacrylaten und vinylisch ungesättigten Carbonsäuren mit 3 bis 7 C-Atomen sowie deren Säurechloride und Anhydride.

13. Ein Copolymer gemäss Anspruch 1, worin das Vinyllactam (a) ein heterocyclisches Monomer der Formel I gemäss der Definition in Anspruch 4 ist, das 4 Kohlenstoffatome im heterocyclischen Ring enthält, Vinylmonomer (b) ausgewählt ist unter unsubstituierten und durch Hydroxy substituierten C₁-C₁₈-Alkylacrylaten und -methacrylaten, Aminoniederalkyl- und Mononiederalkylamino-niederalkylacrylaten und -methacrylaten, und Vinylmonomer (c) ausgewählt ist unter Epoxyniederalkylacrylaten und -methacrylaten, Isocyanatoniederalkylacrylaten und -methacrylaten und vinylisch ungesättigten Carbonsäuren mit 3 bis 7 C-Atomen sowie deren Säurechloride und Anhydride.

14. Verfahren zur Herstellung eines Copolymers gemäss Anspruch 1, dadurch gekennzeichnet, dass in einem Reaktionsgefäss eine Monomermischung (I) vorgelegt wird, deren Zusammensetzung entsprechend der Lewis-Mayo Gleichung die gewünschte statistische Copolymerzusammensetzung ergibt, die Polymerisation mit einem Initiator initiiert wird, nach der Initiierung der Polymerisation eine Monomermischung (II) zudosiert wird, deren Zusammensetzung der gewünschten Copolymerzusammensetzung entspricht, und die Zudosiergeschwindigkeit nach dem Verbrauch der Monomeren ausgerichtet wird, wobei im Reaktionsgefäss dafür gesorgt wird, dass die Monomerenkonzentration und das Monomerenverhältnis während der Reaktion konstant ist, und anschliessend das so erhältliche Copolymer mit einem reaktiven Vinylmonomer (c) vermischt und zur Reaktion gebracht wird, wobei die vinylische Gruppe des reaktiven Vinylmonomers erhalten bleibt.

15. Verfahren gemäss Anspruch 14, wobei die Monomerenkonzentration während der Reaktion dadurch konstant gehalten wird, dass die Zudosiergeschwindigkeit der Monomermischung (II) analog zum steigendem Reaktionszeitbedarf linear verringert wird.

16. Verfahren gemäss Anspruch 14, wobei die Monomerenkonzentration während der Reaktion dadurch konstant gehalten wird, dass der Initiator während der Reaktion konstant linear zudosiert wird.

17. Ein Hydrogel, dadurch gekennzeichnet, dass es im wesentlichen besteht aus einem Copolymer gemäss Anspruch 1 in vernetzter Form.

18. Hydrogel gemäss Anspruch 17, dadurch gekennzeichnet, dass es sich um eine Kontaktlinse handelt.

19. Verfahren zur Herstellung eines Hydrogels gemäss Anspruch 17, dadurch gekennzeichnet, dass ein Vinyllactam-Copolymer gemäss Anspruch 1 in wässriger Lösung vernetzt wird.

20. Verfahren gemäss Anspruch 19, wobei die Konzentration der wässrigen Lösung dem endgültigen Wassergehalt des Hydrogels entspricht.

21. Verfahren gemäss Anspruch 19, wobei mit UV-Licht vernetzt wird.

22. Verfahren gemäss Anspruch 19, wobei das Hydrogel eine Kontaktlinse mit fertigem Wassergehalt und endgültiger Geometrie ist.

23. Kontaktlinse erhältlich durch Vernetzen eines Copolymers gemäss Anspruch 1.

24. Formkörper bestehend im wesentlichen aus einem Copolymer gemäss Anspruch 1, in vernetzter Form.

## Claims

1. A water-soluble cross-linkable copolymer comprising a copolymerisation product of a monomer mixture consisting substantially of 30 - 95 mol % of a vinyl lactam (a) and 5 - 70 mol % of at least one vinyl monomer (b) selected from the group consisting of hydrophobic, hydrophilic and functional vinyl monomers, wherein the monomers are present in the copolymer in the form of randomly distributed building blocks according to the Lewis-Mayo theory, a functional vinyl monomer (b) being present as a building block in the copolymer and that building block being modified with a reactive vinyl monomer (c), the reactive vinyl monomer (c) being linked, with retention of its vinylic group and with the formation of a covalent bond, to a building block of a functional vinyl monomer, and the proportion of reactive vinyl monomer (c) being up to 50 mol % of the total amount of vinyl monomer (b) and (c).

2. A copolymer according to claim 1 that comprises a copolymerisation product of a monomer mixture consisting of
50 - 90 mol % of a vinyl lactam (a) and
10 - 50 mol % of at least one vinyl monomer (b), and a reactive vinyl monomer (c).

3. A copolymer according to claim 1 that comprises a copolymerisation product of a monomer mixture consisting of
60 - 80 mol % of a vinyl lactam (a) and
20 - 40 mol % of at least one vinyl monomer (b), and a reactive vinyl monomer (c).

4. A copolymer according to claim 1 wherein the vinyl lactam (a) is a five- to seven-membered ring of formula I 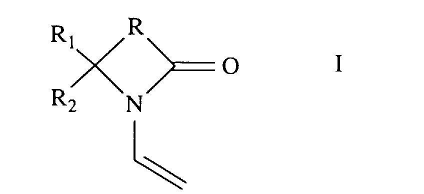 wherein
R is an alkylene bridge having from 2 to 8 carbon atoms, R₁ is hydrogen, lower alkyl, aryl having up to 10 carbon atoms or aralkyl or alkaryl having up to 14 carbon atoms, and R₂ is hydrogen or lower alkyl.

5. A copolymer according to claim 4 wherein the vinyl lactam (a) is a heterocyclic monomer of formula I containing 4 carbon atoms in the heterocyclic ring.

6. A copolymer according to claim 1 wherein the hydrophobic vinyl monomer (b) is selected from C₁-C₁₈alkyl and C₃-C₁₈cycloalkyl acrylates and methacrylates, C₃-C₁₈-alkyl-acrylamides and -methacrylamides, acrylonitrile, methacrylonitrile, vinyl-C₁-C₁₈-alkanoates, C₂-C₁₈alkenes, C₂-C₁₈haloalkenes, styrene, lower alkylstyrenes, lower alkyl vinyl ethers, C₂-C₁₀perfluoroalkyl acrylates and methacrylates, or acrylates and methacrylates partially fluorinated in a corresponding manner, C₃-C₁₂perfluoroalkyl-ethyl-thiocarbonylaminoethyl acrylates and methacrylates, acryloxy- and methacryloxy-alkylsiloxanes, N-vinylcarbazole and C₁-C₁₂alkyl esters of maleic acid, fumaric acid, itaconic acid and mesaconic acid.

7. A copolymer according to claim 1 wherein the hydrophilic vinyl monomer (b) is selected from hydroxy-substituted lower alkyl acrylates and methacrylates, acrylamide, methacrylamide, lower alkyl-acrylamides and -methacrylamides, ethoxylated acrylates and methacrylates, hydroxy-substituted lower alkyl-acrylamides and -methacrylamides, hydroxy-substituted lower alkyl vinyl ethers, sodium ethylenesulfonate, sodium styrenesulfonate, 2-acrylamido-2-methylpropanesulfonic acid, N-vinylpyrrole, 2- and 4-vinylpyridine, vinylically unsaturated carboxylic acids having a total of from 3 to 5 carbon atoms, amino-lower alkyl, mono-lower alkylamino-lower alkyl and di-lower alkylamino-lower alkyl acrylates and methacrylates and allyl alcohol.

8. A copolymer according to claim 1 wherein the functional vinyl monomer (b) is selected from hydroxy-substituted lower alkyl acrylates and methacrylates, ethoxylated acrylates and methacrylates, epoxy-lower alkyl acrylates and methacrylates, epoxycycloalkyl-lower alkyl acrylates and methacrylates, hydroxy-substituted lower alkyl-acrylamides and -methacrylamides, hydroxy-substituted lower alkyl vinyl ethers, amino- or hydroxy-substituted styrenes, sodium ethylenesulfonate, sodium styrenesulfonate, 2-acrylamido-2-methylpropanesulfonic acid, acrylic acid, methacrylic acid, amino-lower alkyl and mono-lower alkylamino-lower alkyl acrylates and methacrylates, acryloxy- and methacryloxy-lower alkyl-maleimides and allyl alcohol.

9. A copolymer according to claim 1 wherein one or more of the vinyl monomers (b) is/are selected from any one of claims 6, 7 and 8.

10. A copolymer according to claim 1 wherein the reactive vinyl monomer (c) is selected from hydroxy-substituted lower alkyl acrylates and methacrylates, hydroxy-substituted lower alkyl-acrylamides and -methacrylamides, hydroxy-substituted lower alkyl vinyl ethers, 2-acrylamido-2-methylpropanesulfonic acid, amino-lower alkyl and mono-lower alkylamino-lower alkyl acrylates and methacrylates, allyl alcohol, epoxy-lower alkyl acrylates and methacrylates, isocyanato-lower alkyl acrylates and methacrylates, vinylically unsaturated carboxylic acids having from 3 to 7 carbon atoms and also the acid chlorides and anhydrides thereof, amino-, hydroxy- or isocyanate-substituted styrenes and epoxycycloalkyl-lower alkyl acrylates and methacrylates.

11. A copolymer according to claim 1 wherein the vinyl lactam (a) is a heterocyclic monomer of formula I according to the definition in claim 4 containing 4 carbon atoms in the heterocyclic ring and the vinyl monomer (b) is selected from unsubstituted or hydroxy-substituted C₁-C₁₈alkyl acrylates and methacrylates, lower alkyl-acrylamides and -methacrylamides and allyl alcohol.

12. A copolymer according to claim 1 wherein the vinyl lactam (a) is a heterocyclic monomer of formula I according to the definition in claim 4 containing 4 carbon atoms in the heterocyclic ring and the vinyl monomer (c) is selected from amino-lower alkyl and mono-lower alkylamino-lower alkyl acrylates and methacrylates, epoxy-lower alkyl acrylates and methacrylates and vinylically unsaturated carboxylic acids having from 3 to 7 carbon atoms and also the acid chlorides and anhydrides thereof.

13. A copolymer according to claim 1 wherein the vinyl lactam (a) is a heterocyclic monomer of formula I according to the definition in claim 4 containing 4 carbon atoms in the heterocyclic ring, the vinyl monomer (b) is selected from unsubstituted and hydroxy-substituted C₁-C₁₈alkyl acrylates and methacrylates, amino-lower alkyl and mono-lower alkylamino-lower alkyl acrylates and methacrylates, and the vinyl monomer (c) is selected from epoxy-lower alkyl acrylates and methacrylates, isocyanato-lower alkyl acrylates and methacrylates and vinylically unsaturated carboxylic acids having from 3 to 7 carbon atoms and also the acid chlorides and anhydrides thereof.

14. A process for the preparation of a copolymer according to claim 1 wherein a monomer mixture (I), the composition of which gives the desired random copolymer composition in accordance with the Lewis-Mayo equation, is placed in a reaction vessel, polymerisation is initiated with an initiator and, after polymerisation has been initiated, a monomer mixture (II) is metered in, the composition of which corresponds to the desired copolymer composition, and the metering speed is in accordance with the consumption of the monomers, it being ensured in the reaction vessel that the concentration of the monomers and the ratio of the monomers are constant during the reaction, and the copolymer so obtainable is then mixed with a reactive vinyl monomer (c) and caused to react, the vinylic group of the reactive vinyl monomer being retained.

15. A process according to claim 14, wherein the concentration of the monomers is kept constant during the reaction by reducing in a linear manner the metering speed of the monomer mixture (II) in accordance with the increasing reaction time requirement.

16. A process according to claim 14 wherein the concentration of the monomers is kept constant during the reaction by metering in the initiator in a constant linear manner during the reaction.

17. A hydrogel consisting substantially of a copolymer according to claim 1 in cross-linked form.

18. A hydrogel according to claim 17 that is a contact lens.

19. A process for the preparation of a hydrogel according to claim 17 wherein a vinyl lactam copolymer according to claim 1 is cross-linked in aqueous solution.

20. A process according to claim 19 wherein the concentration of the aqueous solution corresponds to the final water content of the hydrogel.

21. A process according to claim 19 wherein the cross-linking is effected with UV light.

22. A process according to claim 19 wherein the hydrogel is a contact lens with a final water content and a final geometry.

23. A contact lens obtainable by cross-linking a copolymer according to claim 1.

24. A moulding consisting substantially of a copolymer according to claim 1 in cross-linked form.

## Revendications

1. Un copolymère réticulable soluble dans l'eau, contenant un produit de copolymérisation d'un mélange de monomères constitué essentiellement de 30-95 moles % d'un vinyllactame (a) et de 5-70 moles % d'au moins un monomère vinylique (b), choisi parmi le groupe des monomères vinyliques hydrophobes, hydrophiles et fonctionnels, caractérisé en ce que les monomères sont présents dans le copolymère sous forme d'éléments constitutifs répartis statistiquement selon la théorie de Lewis-Mayo, dans le copolymère, un monomère vinylique fonctionnel (b) devant être contenu comme élément constitutif, et celui-ci devant être modifié avec un monomère vinylique réactif (c), le monomère vinylique réactif (c) devant être lié avec un élément constitutif d'un monomère vinylique fonctionnel en conservant son groupe vinylique et en formant une liaison covalente et la quantité du monomère vinylique réactif (c) étant jusqu'à 50 moles % par rapport à la somme des monomères comprenant le monomère vinylique (b) et (c).

2. Un copolymère selon la revendication 1, contenant un produit de copolymérisation d'un mélange de monomères constitué de
50-90 moles % d'un vinyllactame (a) et
10-50 moles % d'au moins un monomère vinylique (b) et d'un monomère vinylique réactif (c).

3. Un copolymère selon la revendication 1, contenant un produit de copolymérisation d'un mélange de monomères constitué de
60-80 moles % d'un vinyllactame (a) et
20-40 moles % d'au moins un monomère vinylique (b) et d'un monomère vinylique réactif (c).

4. Un copolymère selon la revendication 1, dans lequel le vinyllactame (a) est un cycle à 5 à 7 chaînons de formule I 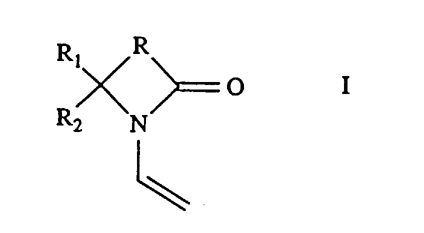 où R signifie un pont alkylène ayant de 2 à 8 atomes de carbone, R₁ signifie l'hydrogène, un groupe alkyle inférieur, aryle ayant jusqu'à 10 atomes de carbone ou un groupe aralkyle ou alkaryle ayant jusqu'à 14 atomes de carbone et R₂ signifie l'hydrogène ou un groupe alkyle inférieur.

5. Un copolymère selon la revendication 4, dans lequel le vinyllactame (a) est un monomère hétérocyclique de formule I qui contient 4 atomes de carbone dans le cycle hétérocyclique.

6. Un copolymère selon la revendication 1, dans lequel le monomère vinylique hydrophobe (b) est choisi parmi les acrylates et méthacrylates de C₁-C₁₈-alkyle et C₃-C₁₈-cycloalkyle, les acrylamides et méthacrylamides de C₃-C₁₈-alkyle, l'acrylonitrile, le méthacrylonitrile, les C₁-C₁₈alcanoates de vinyle, les C₂-C₁₈-alcènes, les C₂-C₁₈-haloalcènes, le styrène, les alkyl inférieur-styrènes, les vinyléthers d'alkyle inférieur, les acrylates et méthacrylates de C₂-C₁₀-perfluoroalkyle ou les acrylates et méthacrylates partiellement fluorés correspondants, les acrylates et méthacrylates de C₃-C₁₂-perfluoroalkyl-éthylthiocarbonylaminoéthyle, les acryloxy- et méthacryloxyalkylsiloxanes, le N-vinylcarbazol et les esters C₁-C₁₂-alkyliques de l'acide maléique, de l'acide fumarique, de l'acide itaconique et de l'acide mésaconique.

7. Un copolymère selon la revendication 1, dans lequel le monomère vinylique hydrophile (b) est choisi parmi les acrylates et méthacrylates d'alkyle inférieur substitués par un groupe hydroxy, l'acrylamide, le méthacrylamide, les acrylamides et méthacrylamides d'alkyle inférieur, les acrylates et méthacrylates éthoxylés, les acrylamides et méthacrylamides d'alkyle inférieur substitués par un groupe hydroxy, les vinyléthers d'alkyle inférieur substitués par un groupe hydroxy, l'éthylènesulfonate de sodium, le styrènesulfonate de sodium, l'acide 2-acrylamido-2-méthylpropanesulfonique, le N-vinylpyrrole, la 2- et 4-vinylpyridine, les acides carboxyliques à insaturation vinylique ayant en tout de 3 à 5 atomes de carbone, les acrylates et méthacrylates d'amino-alkyle inférieur, de mono-alkylamino inférieur-alkyle inférieur et di-alkylamino inférieur-alkyle inférieur et l'alcool allylique.

8. Un copolymère selon la revendication 1, dans lequel le monomère vinylique fonctionnel (b) est choisi parmi les acrylates et méthacrylates d'alkyle inférieur substitués par un groupe hydroxy, les acrylates et méthacrylates éthoxylés, les acrylates et méthacrylates d'époxy-alkyle inférieur, les acrylates et méthacrylates d'époxycycloalkyl-alkyle inférieur, les acrylamides et méthacrylamides d'alkyle inférieur substitués par un groupe hydroxy, les vinyléthers d'alkyle inférieur substitués par un groupe hydroxy, les styrènes substitués par un groupe amino ou hydroxy, l'éthylènesulfonate de sodium, le styrènesulfonate de sodium, l'acide 2-acrylamido-2-méthylpropanesulfonique, l'acide acrylique, l'acide méthacrylique, les acrylates et méthacrylates d'amino-alkyle inférieur, de mono-alkylamino inférieur-alkyle inférieur, les maléimides d'acryloxy et de méthacryloxy-alkyle inférieur et l'alcool allylique.

9. Un copolymère selon la revendication 1, dans lequel un ou plusieurs des monomères vinyliques (b) est/sont choisi(s) parmi l'un des revendications 6, 7 et 8.

10. Un copolymère selon la revendication 1, dans lequel le monomère vinylique réactif (c) est choisi parmi les acrylates et méthacrylates d'alkyle inférieur substitués par un groupe hydroxy, les acrylamides et méthacrylamides d'alkyle inférieur substitués par un groupe hydroxy, les vinyléthers d'alkyle inférieur substitués par un groupe hydroxy, l'acide 2-acrylamido-2-méthylpropanesulfonique, les acrylates et méthacrylates d'amino-alkyle inférieur et de mono-alkylamino inférieur-alkyle inférieur, l'alcool allylique, les acrylates et méthacrylates d'époxy-alkyle inférieur, les acrylates et méthacrylates d'isocyanato-alkyle inférieur, les acides carboxyliques à insaturation vinylique ayant de 3 à 7 atomes de carbone ainsi que leurs chlorures et leurs anhydrides d'acides, les styrènes substitués par un groupe amino, hydroxy ou isocyanate et les acrylates et méthacrylates d'époxycycloalkyl-alkyle inférieur.

11. Un copolymère selon la revendication 1, dans lequel le vinyllactame (a) est un monomère hétérocyclique de formule I selon la définition de la revendication 4, qui contient 4 atomes de carbone dans le cycle hétérocyclique et le monomère vinylique (b) est choisi parmi les acrylates et méthacrylates de C₁-C₁₈-alkyle non substitués ou substitués par un groupe hydroxy, les acrylamides et méthacrylamides d'alkyle inférieur et l'alcool allylique.

12. Un copolymère selon la revendication 1, dans lequel le vinyllactame (a) est un monomère hétérocyclique de formule I selon la définition de la revendication 4, qui contient 4 atomes de carbone dans le cycle hétérocyclique et le monomère vinylique (c) est choisi parmi les acrylates et méthacrylates d'amino-alkyle inférieur et de mono-alkylamino inférieur-alkyle inférieur, les acrylates et méthacrylates d'époxy-alkyle inférieur et les acides carboxyliques à insaturation vinylique ayant de 3 à 7 atomes de carbone ainsi que leurs chlorures et leurs anhydrides d'acides.

13. Un copolymère selon la revendication 1, dans lequel le vinyllactame (a) est un monomère hétérocyclique de formule I selon la définition de la revendication 4, qui contient 4 atomes de carbone dans le cycle hétérocyclique, le monomère vinylique (b) est choisi parmi les acrylates et méthacrylates de C₁-C₁₈-alkyle non substitués et substitués par un groupe hydroxy, les acrylates et méthacrylates d'amino-alkyle inférieur et de mono-alkylamino inférieur-alkyle inférieur et le monomère vinylique (c) est choisi parmi les acrylates et méthacrylates d'époxy-alkyle inférieur, les acrylates et méthacrylates d'isocyanato-alkyle inférieur et les acides carboxyliques à insaturation vinylique ayant de 3 à 7 atomes de carbone ainsi que leurs chlorures et leurs anhydrides d'acides.

14. Un procédé de préparation d'un copolymère selon la revendication 1, caractérisé en ce qu'on introduit dans un récipient de réaction un mélange de monomères (I), dont la composition donne la composition copolymère statistique désirée correspondant à l'équation de Lewis-Mayo, on initie la polymérisation avec un initiateur, on dose un mélange de monomères (II) après l'initiation de la polymérisation, dont la composition correspond à la composition copolymère désirée et on établit la vitesse de dosage en fonction de la consommation des monomères, en s'assurant que dans le récipient de réaction, la concentration en monomères et le rapport des monomères soient constants pendant la réaction, et on mélange ensuite le copolymère ainsi obtenu avec un monomère vinylique réactif (c) et on provoque la réaction, le groupe vinylique du monomère vinylique réactif étant conservé.

15. Un procédé selon la revendication 14, selon lequel la concentration en monomères est maintenue constante pendant la réaction, en réduisant de manière linéaire la vitesse de dosage du mélange de monomères (II) en fonction de l'augmentation des besoins en temps de réaction.

16. Un procédé selon la revendication 14, selon lequel la concentration en monomères est maintenue constante pendant la réaction, en dosant l'initiateur de manière linéaire constante pendant la réaction.

17. Un hydrogel, caractérisé en ce qu'il comprend essentiellement un copolymère selon la revendication 1 sous forme réticulée.

18. Un hydrogel selon la revendication 17, caractérisé en ce qu'il s'agit d'une lentille de contact.

19. Un procédé de préparation d'un hydrogel selon la revendication 17, caractérisé en ce qu'on réticule un copolymère de vinyllactame selon la revendication 1 dans une solution aqueuse.

20. Un procédé selon la revendication 19, selon lequel la concentration de la solution aqueuse correspond à la teneur définitive en eau de l'hydrogel.

21. Un procédé selon la revendication 19, selon lequel la réticulation est effectuée avec de la lumière UV.

22. Un procédé selon la revendication 19, selon lequel l'hydrogel est une lentille de contact avec une teneur finale en eau et une géométrie définitive.

23. Une lentille de contact obtenue par réticulation d'un copolymère selon la revendication 1.

24. Un moulage constitué essentiellement d'un copolymère selon la revendication 1, sous forme réticulée.
